# EUROPÄISCHE PATENTSCHRIFT

(11) **EP 2 263 021 B1**
(45) Veröffentlichungstag und Bekanntmachung des Hinweises auf die Patenterteilung: **29.08.2012**
(21) Anmeldenummer: 09727394.0
(22) Anmeldetag: 31.03.2009
(51) Int. Cl.: F16F 1/36, F03D 11/04, F16F 1/387

(54) **DURCH DRUCKMITTEL VORSPANNBARE ELASTOMERBAUTEILE UND DEREN HERSTELLUNGSVERFAHREN**
ELASTOMER COMPONENTS THAT CAN BE PRESTRESSED BY PRESSURE MEANS AND METHOD FOR THE PRODUCTION THEREOF
COMPOSANTS EN ÉLASTOMÈRE POUVANT ÊTRE PRÉCONTRAINTS À L'AIDE DE MOYENS DE PRESSION ET PROCÉDÉ POUR LEUR FABRICATION

(30) Priorität: 03.04.2008 EP 08006773
(43) Veröffentlichungstag der Anmeldung: 22.12.2010
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen
(86) Internationale Anmeldenummer: PCT/EP2009/002320
(87) Internationale Veröffentlichungsnummer: WO 2009/121552

(56) Entgegenhaltungen:
- EP-A- 1 046 832
- EP-A- 1 566 543
- EP-A- 1 887 248

## Beschreibung

Die Erfindung betrifft neuartig vorspannbare Elastomerbauteile, insbesondere Elastomerbuchsen oder elastomere Schichtfedem, ihre Verwendung und Verfahren zu ihrer Herstellung. Die Erfindung betrifft insbesondere große Elastomerbauteile, welche ein großes Elastomervolumen mit einer ausreichend großen Vorspannung aufweisen sollen oder müssen, wie dies beispielsweise für den Einsatz in Windkraftanlagen erforderlich ist. Die erfindungsgemäßen Elastomerbauteile beruhen dabei im Wesentlichen auf das Einbringen und Integrieren von einzelnen oder in Strukturen angeordneten Trennelementen in den Elastomerkörper des Bauteils, welcher durch zugeführte Druckmittel in den Bereich zwischen Trennmittel und umgebenden Elastomermaterial, oder in die Trennelemente selbst komprimiert und somit vorgespannt werden kann. Bei Verwendung von hydraulischen Flüssigkeiten oder Gasen kann somit eine variable einstellbare Vorspannung des Elastomebauteils erzielt werden, während bei Verwendung einer polymerisierbaren Flüssigkeit eine fest eingestellte Vorspannung möglich ist.

Elastomere haben die Eigenschaft, dass insbesondere bei permanenten Vorhandensein oder Entstehen von Zugspannungen die Lebensdauer des Materials sehr begrenzt wird. Deshalb wird bei Auslegung und Herstellung von Bauteilen, welche Elastomere für Dämpfungszwecke aufweisen, sehr genau darauf geachtet, dass keine Zugspannungen auftreten können.

Aus diesem Grund werden nach dem Stand der Technik Elastomerbauteile, z.B. Elastomerbuchsen für Windkraftanlagen, nach der Vulkanisation des Gummimaterials vorgespannt. Das geschieht in der Regel durch Kalibrieren.

Eine Elastomerbuchse besteht im einfachsten Fall aus einer Außen- und Innenschale in der Regel aus Metall von zumeist runder oder elliptischer Form, wobei die beiden Schalen durch eine Elastomerschicht unterschiedlicher Dicke miteinander verbunden sind. Die Elastomerbuchse bildet eine Art Manschette, welche mit ihrer Innenschale um den zu dämpfenden Gegenstand (z.B. eine Welle oder Achse einer zu dämpfenden Maschine oder Vorrichtung) gelegt ist. Beim Kalibrieren wird nun entweder die Außenschale durch ein Rohr mit kleinerem Durchmesser hindurch gepresst und dabei plastisch verformt. Hierdurch wird der Durchmesser der Außenschale geringer, so dass eine Vorspannung des zwischen der Außen- und Innenschale befindlichen Elastomers erfolgt. Umgekehrt kann eine Vorspannung erzeugt werden, in dem ein Bolzen mit größerem Durchmesser als die Innenschale durch dieselbe gepresst wird, was zur Aufweitung der Innenschale nach außen und somit eine Komprimierung der Elastomerschicht zwischen der Außen- und Innenschale zur Folge hat.

Diese beiden Verfahren können einzeln oder auch zusammen durchgeführt werden. Ist die Elastomerschicht durch die Kalibrierung verdichtet, so ist diese damit in Druckrichtung vorgespannt. Bei radialer Verformung der Außenschale zur Innenschale wird in diesem Druckbereich gearbeitet, sodass es nicht zu Zugspannungen in der Elastomerschicht kommt und die Lebensdauer der Bauteile gewährleistet ist.

Ähnlich verhält es sich mit anderen Elastomerelementen, wie Schichtfedern oder andere Lager oder Dämpfungsmittel, bei denen eine recht große Elastomerschicht im nicht unerheblichen Maß komprimiert und damit vorgespannt werden muss.

Das oben beschriebene bekannte Verfahren der Technik lässt sich jedoch nur bei Buchsen und Lagern mit kleineren Abmessungen (Durchmesser kleiner als 30 cm) kostenverträglich realisieren. Die Kräfte, die aufgewendet werden müssen, um größere Buchsen (Durchmesser größer als 30 cm, vorzugsweise größer als 100 cm) vorzuspannen, bzw. zu kalibrieren, sind zum einen zu groß, zum anderen müssten in diesen Fällen die Abschluss- oder Begrenzungselemente oder -platten entsprechend ihrer Dicke dimensioniert und aus sehr massiven Material angefertigt sein, damit diese sich nicht durch den großen Innendruck des Elastomers, der aufgrund der vorgenommenen Kalibrierung entstanden ist, wieder aufbiegen, bzw. sich deformieren. Ähnliche Probleme sind bei Anordnungen zu erwarten, welche besondere Werkstoffe oder besondere Formen aufweisen sollen und somit nicht oder nur eingeschränkt nach den bekannten Methoden der Technik zu kalibrieren sind.

Es bestand somit die Aufgabe, elastomere, vorspannbare, als Lager, insbesondere Buchsen, vorzugsweise Buchsen für Windkraftanlagen dienende Bauteile und Verfahren zur ihrer Herstellung und ihrer Kalibrierung zur Verfügung zu stellen.

Die gattungsbildende EP 1 566 543 A1 betrifft ferner eine hydraulisch oder mechanisch regulierbare Elastomerlagerung basierend auf entsprechend angeordneten Federelementen, deren Federsteifigkeit sich durch verformbare Elastomerkörper individuell vorspannen lässt, wobei die Verformung des Elastomers durch hydraulische oder mechanische Mittel an einer begrenzten definierten Stelle der Lagerung beziehungsweise des Federelementes erreicht wird.

Demgegenüber bestand somit zusätzlich die objecktive Aufgabe, die Vorspannung des Elastomermaterials gleichmäßig und vielfältiger über das gesamte elastomere Bauteil unabhängig von seiner Form und Gestaltung zu verteilen.

Diese Aufgabe wird durch ein vorspannbares Elastomerbauteil mit den technischen Merkmalen des unablaängigen worrichtungs anspruchs 1 sowie durch ein Verfahren zur Herstellung. eines solchen Elastomerbanteils mit den Verfahrensschritten des unabhängigen Verfahrensanspruchs 26 gelöst, wobei die unabhängigen Ansprüche 27 bis 29 verschieden Verwendungen des besagten Elastomerbauteils angeben.

Zusätzliche technische Merkmale der Erfindung sind in den abhängigen Ansprüchen angegeben.

Es wurde gefunden, dass sich Elastomerbauteile, welche ein entsprechend dimensioniertes Trennelement, vorzugsweise in ihrem Inneren aufweisen, besonders vorteilhaft und wirkungsvoll komprimieren lassen, wenn der Bereich entweder in den Trennelementen selbst oder aber vorzugsweise um die Trennelemente herum über eine Zuführung mit flüssigen, gasförmigen oder polymerisierenden Mitteln unter Druck versorgt wird. Das Trennelement kann dabei so gestaltet sein, dass es durch das eindringende Druckmittel aufgeweitet wird. In der bevorzugten Ausführungsform der Erfindung sind die Trennelemente derart konzipiert, dass sich durch das Eindringen von Druckmittel Kammern und Hohlräume zwischen Trennelement und anliegender Elastomerschicht bilden, welche bewirken, dass sich die Elastomerschicht entsprechend den gewählten Eigenschaften des Trennelementes sowie des Elastomermaterials gezielt großvolumig, auf bestimmte Teile des Elastomerbauteils beschränkt, lokal unterschiedlich oder gleichmäßig komprimiert und somit vorspannt.

Dieses neuartige Prinzip der Elastomerkompression und seine Verwendung ist sehr variabel im Bezug auf die Art und Effektivität der Trennelemente als auch der einsetzbaren Druckmittel, welche eine fest oder variabel bis dynamisch einstellbare Vorspannung des Elastomerteils generell ermöglichen. Dadurch lassen sich die elastomeren Bauelemente, beispielsweise Buchsen oder Schichtfedern, im Bezug auf die Vorspannung über einen großen Bereich bestens gegebenenfalls variabel kalibrieren, was somit einen weiteren Vorteil über die diesbezüglichen Elastomerteile des Standes der Technik und deren Herstellung darstellt.

Die Trennelemente der neuartigen Elastomerbauteile umfassen in der bevorzugten Ausführungsform Materialien, die eigentlich nur dazu dienen, in der Elastomer schicht Bereiche und Zonen unterschiedlicher Größe und Struktur bereitzustellen, in denen das Elastomermaterial nicht durchgängig vorhanden ist, sondern durch die Trennelemente unterbrochen ist, so dass in diesen Bereichen im druckfreien Zustand die elastomeren Flächen des umgebenden Elastomermaterials an dem Trennelement anliegen und bei Einleitung eines Druckmittels über eine Zuleitung, also unter Druck, in diesen Bereich von dem Trennelement abgehoben werden, wodurch sich Kavitäten oder Kammern bilden. Dadurch kann die besagte Elastomerschicht weiter komprimiert bzw. vorgespannt werden. Die Zuführung des Druckmittels wird dabei so lange fortgeführt, bis die gewünschte Vorspannung in dem Elastomerteil oder dem betreffenden Teil des Elastomers erreicht wird.

Um die Erzeugung besagter Kammern und Hohlräume zu erreichen, werden die Trennelemente bei der Herstellung der Elastomerschicht in das noch nicht feste viskose Gummi- oder Polymermaterial auf verschiedene Weise eingebracht. Entscheidend ist dabei, dass die Trennelemente bei diesem Prozess keine feste chemische Verbindung mit dem noch weichen, nicht ausgehärteten Elastomermaterial eingehen. Nur dadurch können sich die erwähnten Kavitäten oder Grenzflächen entsprechend der Struktur und Geometrie der Trennelemente nach Aushärtung des Elastomermaterials bilden.

In einer anderen Weiterbildung der Erfindung (laut Anspruch 10 bzw. 11) dient das Trennelement nicht als Ober- bzw. Grenzfläche zur umgebenden Fläche des Elastomermaterials, zwischen die das Druckmittel eindringt, sondern es ist als elastischer Hohlkörper konzipiert. In diesem Fall erfolgt die Zuführung des Druckmittels nicht zwischen Trennelement und Elastomerschicht, sondern in den Hohlkörper selbst. Im einfachsten Fall ist der Hohlkörper ein elastischer Schlauch oder ein beliebig geformter Hohlraum, der von einer elastischen Wand umgeben ist. Im drucklosen Zustand kann der besagte Hohlkörper, durch die ihn umgebende Elastomerschicht ganz oder teilweise zusammengedrückt sein. Der besagte Hohlkörper kann auch teilweise feste Strukturelemente aufweisen, die ein vollständiges Zusammendrücken im drucklosen Zustand durch die angrenzenden Elastomerschichten verhindert. Dies kann erforderlich sein, wenn zum Beispiel viel Verdrängungsvolumen durch das Druckmittel gewünscht ist. Prinzipiell ist es bei dieser Ausführungsform nicht notwendigerweise erforderlich, dass die elastische Wand des Hohlkörpers mit dem umgebenden Material keine chemische Verbindung eingeht, weil das Druckmittel in das Innere des Hohlkörpers und nicht in den besagten Grenzflächenbereich gepresst wird.

Gegenstand der Erfindung (laut Anspruch 1) ist somit ein vorspannbares Elastomerbauteil umfassend mindestens eine Elastomerschicht und mindestens eine druckfeste Zuleitung vorzugsweise mit einem Ventil, wobei die Elastomerschicht (3, 104) im Inneren oder an einer Grenzfläche Bereiche mit einem oder mehreren Trennelementen (4, 105, 107, 115, 116) aufweist, so dass bei Zuführung von Druckmitteln (5) über die Zuleitung mit Ventil (10, 101) im Bereich der Trennelemente (105, 107, 115, 116) oder in den Trennelementen selbst (4) durch Auseinanderdrücken der umgebenden Elastomerschicht Hohlräume oder Kammern (106, 108, 114) entstehen, die mit dem Druckmittel (5) ausgefüllt und aufgeweitet werden können, wodurch die umgebende Elastomerschicht (3, 104) zusammengedrückt wird, und das Elastomerteil so eine Vorspannung erhält.

Gemäβ einer Weiterbildung der Erfindung laut Anspruch 10 ist das Trennelement (107) ein verformbarer Hohlkörper (4) mit elastischer Außenwand, beispielsweise ein elastischer Schlauch, welcher über die Zuleitung (10, 101) mit Druckmittel (5) aufgefüllt und ausgedehnt werden kann.

In der bevorzugten Ausführungsform der Erfindung gemäβ Anspruch 2 liegt das Trennelement (105, 107, 115, 116) an der umgebenden Elastomerschicht an oder ist von ihr umgeben, ohne mit dieser fest verbunden zu sein, und besagte Hohlräume oder Kammern (106, 108, 114) um die Trennelemente herum entstehen durch Einleitung des Druckmittels (5) in diesen Grenzflächenbereich. In diesen Fällen, kann das Trennelement ein Draht, ein Hohldraht, eine Faden, eine Folie, eine Platte, ein Papier, eine Farb-, Lack- oder Firnisschicht aus den verschiedensten Materialen sein, das selbst oder ggf. seine Beschichtung, wie erwähnt, keine chemische Verbindung mit dem Elastomermaterial bei dessen Herstellung eingehen darf.

Die Stärke, bzw. Dicke des Drahtes, des Hohldrahtes, der Folie, der Platte, der Farb-, Lack- oder Firnisschicht kann sehr dünn sein (< 1mm, < 0.5mm, < 0.1mm), was den Vorteil hat, dass die Trennelemente praktisch kein eigenes nennenswertes Volumen und /oder Gewicht aufweisen. Bei Verwendung eines Hohldrahtes oder einer Kanüle, kann im Inneren beispielsweise eine Heizvorrichtung vorgesehen werden, durch die zusätzlich die elastomeren Eigenschaften des Elastomerteils beeinflusst werden können.

Der Draht kann auch im Querschnitt so dimensioniert sein, dass er sich durch seinen eigenen Widerstand beim Stromdurchfluss erhitzt.

Eine weitere Möglichkeit zur Erwärmung des Drahtes oder eines sonstigen eingelegten Metallkörpers ist die Induktion. Dadurch ist eine örtliche oder auch vollständige Erwärmung des eingelegten Bauteiles möglich.

Die Trennelemente (4, 105, 107, 115) können linear, flächenmäßig oder auch dreidimensional (116) im Elastomerkörper des Bauteils angebracht sein. Es können somit ganze Strukturen unterschiedlichster Größe, Verteilung und Anordnung gebildet werden. Beispielsweise kann ein Draht, oder Schlauch ringförmig, spiralförmig, meanderförmig oder unregelmäßig geführt werden, je nach dem, welche Bereiche im Elastomerteil mehr oder weniger stark vorgespannt werden sollen. Eine Schicht kann zum Beispiel in Form von rechteckigen oder runden Arealen, welche durch Kanäle (115) miteinander verbunden sein können, vorliegen. Derartige Schichten können z.B. im Farbdruckverfahren generiert werden, oder als vorgefertigte Platine oder Schablone bereitgestellt werden. Die Trennelemente, bzw. einzelne Strukturen dieser Trennelemente können je nach technischer Erfordernis gleichmäßig verteilt im Elastomerbauteil oder aber auch lokal konzentriert angeordnet werden, wobei, falls sinnvoll, diese Strukturen in einzelnen Segmenten bzw. Bereichen des Elastomerbauteils unterschiedlichen Drucken durch mehrere, entsprechend angeordneten Zuleitungen (10, 101) ausgesetzt werden können.

Eine derartige Variabilität in gegebenenfalls lokal unterschiedlichen Strukturen von Trennelementen ermöglicht letztlich das Installieren einer ebenfalls lokal sehr unterschiedlichen, sehr speziell angepassten individuellen Vorspannung in ausgesuchten Bereichen des erfindungsgemäßen Elastomerbauteils. Die Variabilität in den zu erzielenden Vorspannungen kann auch zusätzlich noch durch Einsatz von elastomeren Materialen mit unterschiedlicher Steifigkeit und / oder variierenden Ausdehnungskoeffizienten im Elastomerbauteil erhöht werden, ebenso wie durch unterschiedliche Temperaturen, welche durch Heizelemente hervorgerufen werden können.

Gegenstand einer Weiterbildung der Erfindung (laut Anspruch 12) ist somit ein entsprechendes Elastomerbauteil, bei dem das Trennelement ein eingelegter Draht, Faden oder Hohldraht (105) ist, welcher aus einem Material besteht oder mit einem Material umgeben ist, das keine feste Verbindung mit dem umgebenden Elastomermaterial (3, 104) bei dessen Herstellung einzugehen vermag.

Gegenstand einer Weiterbildung der Erfindung ist ebenso (laut Anspruch 13) ein entsprechendes Elastomerbauteil, bei dem das Trennelement eine eingebrachte Schicht (107) ist, welche aus Farbe, Lack, Kunststoff, Papier oder Metall ist, welche aus einem Material besteht oder mit einem Material umgeben ist, das keine feste Verbindung mit dem umgebenden Elastomermaterial (3, 104) bei dessen Herstellung einzugehen vermag. Insbesondere kann diese Schicht (107) eine Farb-, Lack, Papier-, Kunststoff- oder Metallschicht oder -Folie sein, die beispielsweise als Schablone, Matrix oder Platine mittels verschiedenster an sich bekannter Verfahren in den Elastomerkörper eingebracht werden.

Gegenstand einer Weiterbildung der Erfindung ist ferner (laut Anspruch 15) ein entsprechendes Elastomerbauteil, bei dem das Trennelement (4, 105, 107, 115, 116) eine ein- zwei- oder dreidimensionale offene oder geschlossene Struktur, beispielsweise (laut Anspruch 16) eine ringförmige, spiralförmige, meanderförmige, unterbrochene oder durchgehende Struktur innerhalb des Elastomers (3, 104) aufweist.

Gegenstand von drei alternativen Weiterbildungen der Erfindung ist demnach auch (laut den Ansprüchen 19, 20 und 21) ein entsprechendes Elastomerbauteil, bei dem entweder
(i) die Elastomerschicht (3, 104) mehrere gleichartige der genannten Trennelemente oder mehrere Einheiten von gleichartigen Trennelementen (4, 105, 107, 115, 116) aufweist, welche gleichmäßig in dem Elastomerbauteil oder einer Untereinheit des Elastomerbauteils verteilt sind, so dass eine gleichmäßige symmetrische Druckverteilung und damit Vorspannung im Elastomerbauteil oder einer Untereinheit auftritt, oder
(ii) die Elastomerschicht (3, 104) mehrere gleichartige der genannten Trennelemente oder mehrere Einheiten von gleichartigen Trennelementen (4, 105, 107, 115, 116) aufweist, welche unterschiedlich in dem Elastomerbauteil oder einer Untereinheit des Elastomerbauteils verteilt sind, wobei diese Trennelemente oder Einheiten von Trennelementen mindestens eine Zuleitung (10, 101) aufweisen, so dass lokal unterschiedlich starke unsymmetrische Druckverteilungen und damit Vorspannungen im Bauteil oder seiner Untereinheiten eingestellt werden können, oder
(iii) die Elastomerschicht (3, 104) mehrere verschiedenartige Trennelemente oder mehrere Einheiten von verschiedenartigen Trennelementen (4, 105, 107, 115, 116) aufweist, welche gleichmäßig in dem Elastomerbauteil oder einer Untereinheit des Elastomerbauteils verteilt sind, wobei diese Trennelemente oder Einheiten von Trennelementen mindestens ein Zuleitung (10, 101) aufweisen, so dass lokal unterschiedlich starke Druckverteilungen und damit Vorspannungen im Bauteil eingestellt werden können.

Selbstverständlich sind auch Elastomerbauteile denkbar, bei denen Mischformen der oben genannten Strukturen eingesetzt werden.

Wie bereits erwähnt, können mehrere Zuleitungen (10, 101) mit Ventilen oder Verschlüssen in einem bestimmten Elastomerbauteil notwendig sein, insbesondere dann, wenn verschiedene lokale Segmente oder Strukturen einem unterschiedlich starkem Druck ausgesetzt werden sollen. Die Zuleitungen müssen druckstabil sein, und sind in der Regel aus den hierfür geeigneten Materialen gefertigt.

Als Druckmittel (5), welches auch als Kalibrierungsfluid anzusehen ist, sind alle gängigen Mittel, zur Erzeugung mittlerer und hoher Drucke geeignet. Insbesondere sind hier hydraulische Flüssigkeiten, wie Öle, Flüssigkunststoffe, Polymergele oder auch Wasser zu nennen. Es können auch Gase oder im einfachsten Fall Luft als Druckmittel eingesetzt werden.

In einer besonderen Ausführungsform, dient als Druckmittel eine flüssige Polymerlösung, welche nach Einstellung der gewünschten Vorspannung bzw. Kompression der Elastomerschicht (3, 104) erhärtet und so für einen festen nicht mehr veränderbaren Vorspannungswert im betreffenden Elastomerteil oder in einem Segment / Bereich des Elastomerbauteils sorgt. Derartige einfache, nicht-dynamische Elastomerbauteile machen Sinn, wenn eine immer gleiche Belastungen des Bauteils zu erwarten sind, und eine Nachkalibrierung nicht erforderlich scheint. Allerdings kann der entstandene Polymerkörper oder die ihn umgebende Hülle (im Falle eines elastischen Hohlkörpers) bei entsprechender Materialwahl selbst wieder eine Trennelement darstellen, dass ein späteres Ergänzen durch nachträgliches Einbringen weiterer polymerisierender oder auch nicht polymerisierender Medien möglich macht. Somit kann z.B. einem aufgetretenen Setzvorgang durch nachträgliches Nachpressen entgegengewirkt werden.

Als Polymere können hierfür übliche Polymere / Copolymere beispielsweise auf Acrylat- oder Methacrylatbasis eingesetzt werden. Desweiteren kann in dem genannten Fall ein aushärtendes bzw. polymerisierbares Ein- oder Mehrkomponenten-Gießmaterial als Druckmittel oder Kalibrierungsfluid (5) eingesetzt werden, welches sich nach dem Einpumpen zu einem elastischen oder auch inflexiblen Kunststoff verfestigt. Vorzugsweise besitzt das eingefüllte Kalibrierungsfluid (5) nach dem Aushärten ähnliche elastische Eigenschaften wie das Bauteil bzw. die Elastomerschicht (3, 104) selbst. Somit ist eine Homogenität des gesamten Elastomerbauteils, bzw. der Elastomerbuchse vorhanden, so dass außer der Druckerhöhung kein hierdurch bedingter wesentlicher Einfluss auf das Bauteil zu erwarten ist.

Wie bereits anfangs erwähnt, sind die erfindungsgemäßen Elastomerbauteile insbesondere geeignet, wenn sie große Proportionen aufweisen müssen, wie dies beispielsweise bei Einbau und Verwendung in Windkraftanlagen oft erforderlich ist.

Hierbei werden insbesondere runde oder elliptische Elastomerbauteile eingesetzt, welche einen mittleren Durchmesser von mehr als 30 cm, vorzugsweise mehr als 50 cm, insbesondere von mehr als 100 cm und ganz besonders von mehr als 200 cm aufweisen.

Dabei ist das Elastomermaterial in der Regel mit mindestens einer, vorzugsweise aber zwei oder mehr Platten oder Schalen, in Form von Abschluss-oder Zwischenplatten oder -schalen (1, 2 , 117, 118, 110 - 113) verbunden oder versehen.

Gegenstand der Erfindung sind somit insbesondere zylindrische oder konisch geformte elastomere Buchsen oder Halbbuchsen sowie elastomere planare Schichtfedem oder anders geformte Elastomerlager, welche mehrere Zwischenplatten oder - bleche aufweisen können und im Stand der Technik an sich bekannt sind (z. B. EP 1 046 832 B1, EP 1 887 248 A1), aber nunmehr die erfindungsgemäßen mit Trennelementen versehenen Elastomerbauteile aufweisen.

Gegenstand einer Weiterbildung der Erfindung ist (laut Anspruch 6) insbesondere ein entsprechendes mit den geschilderten Trennelementen versehenes Elastomerbauteil in Form einer Buchse, Halbbuchse oder eines Segments einer Buchse, dadurch gekennzeichnet, dass es Abschlussplatten (1, 2, 117, 118) aufweist, welche die Geometrie von zylindrischen (112,113) oder konisch (110, 111) geformten Schalen, Halbschalen oder von entsprechend geformten Segmenten dieser Schalen oder Halbschalen besitzen.

In einer besonderen Ausführungsform der erfindungsgemäßen Buchse besitzt diese mindestens eine entsprechend dimensionierte und geformte Aussparung, in welche genau das fehlende Buchsensegment, welches das besagte Trennelement umfasst, passt und fest eingefügt ist, wobei mindestens teilweise Elastomerbereiche der Buchse und des Buchsensegmentes zur Druckübertragung in direkter Berührung stehen. Eine derartige Konstruktion ist vorteilhaft, weil Buchsensegmente mit Trennelementen wie beschrieben, sich leichter herstellen lassen als ganze Buchsen mit den entsprechenden Trennelementen. Falls gewünscht kann das Segment mit den Trennelementen auch auswechselbar gestaltet sein, so dass eine und dieselbe Buchse im montierten Zustand durch Verwendung von Segmenten mit unterschiedlich gestalteten und damit wirkenden Trennelementen versehen werden kann.

Gegenstan einer Weiterbildung der Erfindung ist ferner (laut Anspruch 9) ein entsprechendes Elastomerbauteil, bei dem die Abschlussplatten als Scheiben (117, 118) ausgebildet und so konstruiert sind, dass sie mit Maschinen- oder Generatorteilen verbunden werden können, und die Elastomerschicht (3, 104) besagte Scheiben gegeneinander elastisch lagert.

Die besagten Voll- oder Halbbuchsen ebenso wir die anderen Elastomerelemente sind vorzugsweise mit einer zentralen vorzugsweise runden Öffnung versehen sind zur Aufnahme des zu dämpfenden Teils oder der zu dämpfenden Teile. Die aus unelastischem Material bestehenden Abschluss- oder Zwischenplatten, bzw. Schalen bestehen aus unelastischen Material, beispielsweise Stahl. Dieses Material ist fest mit dem Elastomermaterial verbunden.

In der Regel enthalten herkömmliche Elastomerbuchsen und -lager natürlichen Kautschuk, welcher sich durch Vulkanisierung mit dem metallischen Buchsenmaterial fest verbinden lässt. Da überdimensional große Buchsen aber nur mit sehr großem Aufwand heiß vulkanisiert werden können, werden für entsprechend große erfindungsgemäße Buchsen im ungehärteten Zustand gießfähige und im festen Zustand elastische, vorzugsweise synthetische oder halbsynthetische Werkstoffe eingesetzt.

Solche Werkstoffe sind bekannt. Geeignete Materialien für die erfindungsgemäßen Elastomerbauteile und hierunter insbesondere für große Elastomerbuchsen und Lager sind neben Naturkautschuk elastische Polymere auf Basis von Polyurethan (PU), die aus identischen oder unterschiedlichen Polyolen und Polyisocyanaten aufgebaut sein können und entsprechend ihrer Zusammensetzung und der verwendeten Komponenten unterschiedliche Eigenschaften in Bezug auf Gießfähigkeit, Elastizität und Stabilität aufweisen. Elastische Polymere auf Basis von PU sind hinreichend bekannt, ebenso wie ihre Herstellung und ihre Eigenschaften.

Es können aber auch andere elastische Materialien Einsatz für die erfindungsgemäßen Elastomerbauteile, insbesondere Buchsen, finden, wie beispielsweise folgende pastöse/flüssige Mehrkomponentensysteme: ungesättigte Polyesterharze und Härter, Epoxid/PU-Systeme, Polymer-Silicon-Systeme, Polysulfid-Polymer-Systeme, Zweikomponenten Acrylat-Systeme sowie sonstige Zwei-oder Mehrkomponentensysteme.

Der entsprechende Werkstoff, der die Elastomerschicht (3, 104) bilden soll, wird erfindungsgemäß zwischen die Außenschale (1) und die Innenschale (2) einer an sich herkömmlichen Buchse, welche konzentrisch ineinander stehen, eingegossen. Vor dem Einfüllen des Materials wird ein oder mehrere Trennelemente, wie oben beschrieben, beispielsweise ein Draht (105) oder ein elastischer Schlauch (4) zum Beispiel mittig umlaufend zwischen Außenschale (117) und Innenschale (118) vor dem Gießen des Elastomermaterials eingelegt.

Alternativ besteht die Möglichkeit, den Werkstoff für die Elastomerschicht (3, 104) teilweise, d.h. in Portionen in den Zwischenraum, den die Schalen oder Platten (1) und (2) miteinander bilden, zu gießen und aushärten zu lassen und dann beispielsweise den Draht (105) oder Schlauch (4) auf diesem ausgehärtetem Material zu verlegen, so dass er vorzugsweise keine Berührung mit den Wänden der Schalen / Außenplatten (1,2) hat. Daraufhin wird eine zweite Elastomerschicht (3, 104) hergestellt. Gegebenenfalls können somit weitere Schichten, die Trennelemente (4, 105, 107, 115, 116) enthalten, bereitgestellt werden. Somit wird eine neuartige Elastomerbuchse oder elastomere Schichtfeder zur Verfügung gestellt.

Gegenstand der Erfindung ist daher auch eine Elastomerbuchse, umfassend mindestens eine zylinderförmige feste unelastische Außenschale (113), mindestens eine zylinderförmige feste unelastische Innenschale (112), die einen kleineren mittleren Durchmesser besitzt als die Außenschale, und mindestens eine Elastomerschicht (3, 104), welche den Zwischenraum zwischen den zylinderförmigen Schalen vollständig ausfüllt, und mit diesen fest verbunden ist, wobei der Zwischenraum zwischen den beiden Schalen mindestens ein entsprechendes Trennelement (4, 105, 107, 115, 116) umlaufend oder lokal symmetrisch oder unsymmetrisch verteilt und / oder in ein- zwei- oder dreidimensionalen Strukturen angeordnet, aufweist. Vorzugsweise wird in Buchsen oder auch flachen Schichtfedem, bei denen relativ schmale Elastomerschichten eingesetzt werden sollen, ein vollständig oder nur teilweise umlaufender Draht (105) oder Schlauch (4) verwendet.

Der Draht oder elastische Schlauch kann an einer oder mehreren Stellen radial oder auch axial aus dem Bauteil herausgeführt werden. Über diese Endstücken oder aber direkt, wenn solche nicht vorgesehen sind, über die druckstabile Zuleitung (101, 10), welche gegebenenfalls das Anschlussteil (6) umfasst, wird Druck-/Kalibrierungsmittel (5) unter hohem Druck (5 - 500 bar, vorzugsweise 10-100 bar) beispielsweise aus einem Vorratsgefäß (8) über eine Pumpe (7) in das Trennelement (elastischer Hohlkörper) oder zwischen Trennelement und anliegender umgebender Elastomerschicht (3, 104) gepresst. Bei Verwendung eines elastischen Hohlkörpers (4) (z. B. Schlauchs) im Bauteil weitet sich dieser entsprechend seiner Größe, und des Druckes seiner Füllung aus und verdrängt dadurch die komprimierbare Elastomerschicht (3, 104) so weit, bis eine den Anforderungen entsprechende Vorkomprimierung bzw. Vorspannung der Elastomerschicht bzw. der Elastomerbuchse erreicht wird.

Dasselbe wird bei Einsatz eines Drahtes oder Hohldrahtes (105), oder einer Schicht (107), z. B. einer Folie, eines Farbdruckes, etc. erreicht, wobei allerdings hierbei, wie bereits geschildert, das Druckmittel (5) in die sich durch den Druck bildenden und aufweitenden Zwischenräume zwischen Trennelement (105, 107, 115, 116) und umgebendem Elastomermaterial (3, 104) gepresst wird.

Wie bereits dargelegt, können die erfindungsgemäßen Elastomerbauteile auf grundsätzlich zwei verschiedenen Weisen hergestellt werden.

Die in der Praxis leichter und damit kostengünstiger zu gestaltende Methode, beruht auf Anlegen bzw. Herstellen einzelner Elastomerschichten (3, 104) aus den oben genannten Kautschuk,- Gummi- oder Polymermaterialien, auf welche nach ihrer Verfestigung die besagten Trennelemente in der gewünschten Verteilung und Struktur, und versehen mit den notwendigen Zuleitungen (101) auf- oder angebracht werden. Anschließend wird darauf eine weitere Elastomerschicht aufgebracht, welche die eingebrachten Trennelemente (4, 105, 107, 115, 116) bedeckt bzw. einschließt, so dass diese vollständig von Elastomermaterial umgeben sind.

Somit ist ebengalls Gegenstand der Erfindung (laut Anspruch 26) ein Verfahren zur Herstellung eines vorgespannten Elastomerbauteils wie beschrieben, umfassend die folgenden Schritte:
(i) Bereitstellung einer ersten festen Elastomerschicht als Teilschicht des gesamten Elastomerbauteils in gewünschter Form und Größe,
(ii) Anbringung eines oder mehrerer Trennelemente (4, 105, 107, 115, 116) auf einer Oberfläche der bereitgestellten Elastomerschicht nach Schritt (i) inklusive mindestens einer druckstabilen Zuleitung (10, 101) in oder auf das Trennelement, ggf. unter Zuhilfenahme von Hilfsmitteln, welche die Anbringung und Positionierung auf der Elastomerschicht erleichtern,
(iii) Aufbringung einer zweiten Elastomerschicht in Form einer noch nicht ausgehärteten oder polymerisierten Elastomermasse auf die besagte Trennelemente aufweisende Oberfläche der ersten festen Elastomerschicht, so dass nach Aushärtung oder Polymerisation der Elastomermasse, diese mit der ersten Elastomerschicht eine feste Verbindung eingeht und so letztlich die Elastomerschicht (3, 104) bildet, wobei jedoch die eingebrachten Trennelementen auf Grund ihrer Materialeigenschaft keine Verbindung mit der Elastomermasse bei deren Aushärtung eingehen,
(iv) Wiederholung der Schritte (ii) und (iii) für den Fall, dass mehrere Ebenen von Trennelementen in Form von mehreren Teilschichten in der Elastomerschicht (3, 104) gewünscht sind, und
(v) Einspeisung des Druckmittels über die Zuleitung (10, 101) unter Druck in den Bereich zwischen Trennelement und umgebender Elastomerschicht oder in das Trennelement selbst, wobei sich diese komprimiert und das Elastomerbauteil dadurch eine Vorspannung erhält.

Mit diesen Verfahren lassen sich sehr einfach die erfindungsgemäßen Voll- oder Halbbuchsen, wie oben beschrieben, herstellen.

Die zwerte , zur Erfindung nicht gehörende Verfahrensalternative besteht in der Herstellung des Elastomers (3, 104) in einem einzigen Schritt. Hierzu muss das Trennelement durch entsprechende Hilfsvorrichtungen zwischen die Abschlussplatten, zum Beispiel einer Buchse, gebracht und fixiert werden. Nicht zur Erfindung gehörend ist somit ein Verfahren zur Herstellung eines vorgespannten Elastomerbauteils, welches mindestens eine zylinderförmige, konische oder flache feste, unelastische Außenschale oder -platte, mindestens eine zylinderförmige, konische oder flache feste, unelastische Innenschale oder -platte, und mindestens eine Elastomerschicht (3, 104) aufweist, welche den Zwischenraum zwischen den entsprechend geformten Schalen oder Platten vollständig ausfüllt, und mit diesen fest verbunden ist, wobei das Verfahren die folgenden Schritte aufweist bzw. umfasst:
(i) Einlegen bzw. Fixieren mindestens eines Trennelementes, beispielsweise eines umlaufenden elastischer Schlauches (4) oder eines Drahtes (105), in den Zwischenraum der beiden Schalen des Elastomerbauteils vor Einbringung der Elastomerschicht, wobei das Trennelement mindestens mit einer Zuleitung (10, 101) ausgestattet ist, an der ein Kalibrierungssystem, vorzugsweise umfassend eine Kalibrierungspumpe (7) mit einer Kalibrierungsfüllung, (8) angeschlossen ist,
(ii) Einbringung des Elastomers durch Einfüllen einer viskosen oder flüssigen Elastomermasse, welche nach ihrem Auspolymerisieren die Elastomerschicht (3, 104) bildet, in den durch die Schalen oder Platten (1) und (2) gebildeten Zwischenraum in dem sich das Trennelement, beispielsweise der Draht oder der Schlauch befindet, und
(iii) Zuführung eines viskosen oder flüssigen Kalibrierungsfluid, bzw. Druckmittels (5) in das oder um das Trennelement herum unter Druck, ggf. über ein Anschlussteil (6), nach erfolgter Verfestigung der umgebenden Elastomerschicht (3, 104), wodurch die diese komprimiert und vorgespannt wird.

Durch Zuführung von weiterem Druckmittel bzw. Kalibrierungsfluid (5) unter Druck mittels der beschriebenen Kalibrierungsvorrichtung (Pumpe, Leitung, ggf. Anschlussteile) kann eine höhere Vorspannung bzw. Komprimierung der Elastomerschicht (3, 104) zwischen den Schalen, bzw. Platten des Bauteils bzw. der Buchse erreicht werden.

Bei Verwendung von nicht-polymerisierbaren hydraulischen Flüssigkeiten oder Gasen kann die Vorspannung des Elastomers (3, 104) durch Abführen bzw. Entnahme /Ablassen von Druck- bzw. Kalibrierungsfluid (5) aus den betreffenden aufgeweiteten Bereichen / elastischen Hohlkörpern, zum Beispiel aus dem Schlauch (4) oder aus den gebildeten Kammern oder Hohlräumen (105), verringert werden.

Die Zuführung des Druckmittels (5) in die Trennelemente (107) (elastischer Hohlkörper, z.B. Schlauch (4)) oder in die Bereiche (Kavitäten, Hohlräume) um die besagten Trennelemente (Schichten, Platten, Farbdrucke, Folien, etc.) herum über die Zuleitung (101), kann verschiedenartig erfolgen.

Prinzipiell kann die Zuführung des Druck- bzw. Kalibrierungsmittels (5) axial oder radial erfolgen. Je nach Konstruktion und Bauart des Elastomerbauteils (Buchse, Schichtfeder etc.) kann so die Zuleitung durch die Außenplatten hindurch (1, 2, 117, 118, 110 - 113), z.B. einer Buchse, wie oben beschrieben, nach außen oder auch durch die freie Elastomerschichtfläche (11) des betreffenden Bauteils hindurch nach außen erfolgen. Die Zuleitung (10, 101) ist in der Regel über ein Anschlussteil (6) mit dem jeweiligen aufzufüllenden Volumen (Kammern, Hohlkörper) verbunden. Die Zuleitung selbst steht wiederum in Verbindung, beispielsweise über ein Verbindungsstück mit einer Kalibrierungsanlage (Pumpe, Vorratsvolumen für das Druckmittel (5), ggf. Hochdruckleitungen, etc.). Es können eine oder mehrere Zuleitungen und Anschlussteile in einem Trennelement eingesetzt werden, wobei die Zuleitungen über Druckventile oder andere druckfeste Verschlüsse verfügen.

In einer besonderen und bevorzugten auf Elastomerbuchsen abzielenden Ausführungsform der Erfindung werden die Zuleitungen (10, 101) und Anschlusselemente (6) senkrecht durch die Zylinderwand der Außenschale (113) und / oder Innenschale (112) der Buchse nach außen oder innen geführt. Hierbei weisen die Schalen entsprechend orientierte Bohrungen auf, welche die Zuleitungen und / oder die Anschlussstücke (6) passend aufnehmen. Werden als Trennelemente Schläuche (4) verwendet, welche radial in den Buchsenquerschnitt eingelegt sind, so können die Schlauchenden nach außen, bzw. innen geführt und direkt über die Anschlussstücke mit den Zuleitungen und dem Druckmittelsystem verbunden werden. Dadurch kann eine größere Flexibilität bei der Herstellung bzw. Kalibrierung der Elastomerbauteile, insbesondere von Elastomerbuchsen, erreicht werden.

Die erfindungsgemäßen Elastomerbauteile sind, wie bereits einleitend dargelegt, bestens zur Herstellung von großen bis sehr großen Elastomerbuchsen, Schichtfedern und anderer entsprechender Lager (Durchmesser > 100 cm) geeignet, wie sie in Windkraftanlagen oder Anlagen ähnlicher Ausmaße / Anforderungen zum Einsatz kommen.

Das oben beschriebene neuartige Prinzip, dass Elastomere durch Einbringung von Trennelementen, welche potentielle Kavitäten und Hohlräume definieren, die durch hydraulische oder andere Druckmittel gefüllt und variabel aufgeweitet werden können, so dass das Elastomer eine Kompression und damit eine Vorspannung erfährt, kann nicht nur für die Herstellung und den Einsatz an sich konventioneller elastomerer Buchsen und Lager für große Anlagen, wie oben beschrieben, verwendet werden, sondern auch für die Herstellung und den Einsatz von elastomeren Formen, Anordnungen oder Vorrichtungen, bei denen in unterschiedlichen lokalen Bereichen, ein bestimmtes steuerbares flexibles und veränderbares Kompression- / Dekompressionsverhalten der betreffenden lokalen Elastomerschicht relativ zu anderen Bereichen der elastomeren Form, Anordnung oder Vorrichtung bewirkt werden soll, so dass dadurch gewollte Verformungen bzw. künstliche Bewegungsaktivitäten ermöglicht werden, die in sinnvoller Weise technisch genutzt werden können.

Bei diesen erfindungsgemäßen elastomeren Anordnungen erfolgt die Aufteilung, Gestaltung und Versorgung mit Druckmitteln (5) der Trennelemente (4, 105, 107, 115, 116) sehr differenziert und individuell. Ebenso kann durch Einsatz von elastomerem Material unterschiedlicher Steifigkeit und / oder unterschiedlichem Ausdehnungskoeffizienten in den einzelnen Bereichen der Anordnung, insbesondere im Bereich der Trennelemente, eine weitere Feineinstellung der Flexibilität des Vorspannungsverhaltens des Elastomermaterials in bestimmten gewünschten Bereichen der Anordnung erzielt werden.

Das hierdurch mögliche sehr variable unterschiedliche Kompressions- und Dekompressionsverhalten einzelner Elastomerelemente oder -bereiche in einer Anordnung von Trennlemente aufweisenden Elastomerbauteilen kann durch eine intelligente computergesteuerte Logik in Stärke, Richtung und Zeit in der Weise aufeinander abgestimmt werden, dass Verformungs- bzw. Bewegungsabläufe der Elastomerform entstehen, welche technisch, zum Beispiel zum mechanischen Greifen, Drücken, Schieben, Auslösen etc., ausgenützt werden können. Die elastomere Anordnung kann dabei durch eine entsprechende Formgebung auch einzelner Elemente der Anordnung diesem Ziel weiter nahe gebracht werden. Eine mögliche Gestaltung kann so ein mechanischer Greifer oder sogar eine künstliche Hand sein.

Gegenstand einer Weiterbildung der Erfindung ist somit (laut Anspruch 23) eine elastomere gegebenenfalls eine Form und Gestalt aufweisende Anordnung zur Ausführung von künstlichen Bewegungen oder gewollten Verformungen, umfassend ein oder mehrere gegebenenfalls geformte Elastomerelemente, wie oben beschrieben, welche funktionll in Verbindung miteinander stehen, sowie eine intelligente computer unterstützte Elektronik besitzen, die gezielt die einzelnen Strukturen in den Trennelementen der Elemente ansteuert und für eine dynamische Druckverteilung und somit veränderbare Ausdehnung bzw. Kompression / Dekompression in den lokal unterschiedlichen Bereichen der betreffenden Elastomerschicht(en) sorgt, so dass durch die relativ zueinander unterschiedliche Kompression / Dekompression des Elastomermaterials im Bereich der jeweils angesteuerten Trennelemente eine zielgerichtete Verformung oder Bewegung einzelner Elemente der Anordnung oder der gesamten Anordnung mit Hilfe der Steuerung ausgeführt werden kann.

### Beschreibung der Bezugszeichen im Text und in den Abbildungen

- (1), (117): obere Abschlussplatte
- (2), (118): innere Abschlussplatte
- (3), (104): Elastomerschicht
- (4): Elastomere Schlauch als Trennelement
- (5): Druck- Kalibrierungsmittel
- (6): Anschlussstück
- (7), (8): Pumpe mit Druckmittel
- (9): Entlastungsraum
- (10), (101): Druckleitung / Füllschlauch
- (102): Ventil, Verschlussvorrichtung
- (11): freie Elastomerfläche
- (110): konischs Innenelement (Buchse)
- (111): konisches Außenelement (Buchse)
- (112): zylindrisches Innenteil / Schale (Buchse)
- (113): zylindrisches Außenteil / Schale (Buchse)
- (105): Trennelement als Draht, Faden, Kanüle, Hohldraht
- (107): Trennelement als Schicht (Farbdruck, Lack, Platte, Folie)
- (106), (108), (114): Kavität, Hohlraum oder Kammer nach Auffüllung mit Druckmittel
- (115): Trennelement als Schicht in Kanalstruktur (Farbdruck, Lack, Platine)
- (116): dreidimensionales Gitter aus Trennelementen gemäß (105), (107) und (115)
- (130): Betonfundament
- (131): Stahlring zur Befestigung eines Aufbaus, beispielsweise Turms
- (132): umlaufender Flansch mit erfindungsgemäßen Elastomerbauteilen

### Beschreibung der Abbildungen

- Abb. 1 :: Elastomeres Lager mit eingelegtem Draht, Faden oder Ähnlichem als Trennelement, druckfrei (ohne Vorspannung).
- Abb. 2:: Elastomeres Lager gem. Abb. 1 unter Druck (Vorspannung).
- Abb. 3 :: Elastomeres Lager enthaltend als Trennelement eine Schicht, druckfrei.
- Abb. 4:: Elastomeres Lager gemäß Abb. 3, unter Druck (Vorspannung).
- Abb. 5:: Elastomeres Lager gemäß Abb. 2, 3, welches umlaufende Schichten als Trennelemente aufweist.
- Abb. 6:: Elastomeres Lager gemäß Abb. 2, 3, welches umlaufende Schichten aus Trennelementen aufweist, die meanderförmig (in verschiedenen Ebenen des Elastomers) angeordnet sind.
- Abb. 7:: Konisches Elastomerlager (Buchse), mit Trennelement (Draht), welches durch Fülldruck verspannt ist.
- Abb. 8:: Zylindrische Elastomerbuchse mit Trennelement (elastischer Hohlkörper / Schlauch / Platte).
- Abb. 9:: Elastomerbauteil mit gleichmäßig verteilten durch Farbdruck generierte quadratische / rechteckige Trennelemente, die durch entsprechende Kanalstrukturen miteinander verbunden sind.
- Abb. 10:: Elastomerbauteil mit Gitterstruktur von Trennelementen (Draht).
- Abb. 11:: Schichtfeder mit einer Elastomerschicht mit umlaufenden Draht oder Schlauch nach Einbringen von Druckmittel (Vorspannung). Die Zuleitung erfolgt axial von außen durch eine Abschlussplatte.
- Abb. 12:: Schichtfeder mit einer Elastomerschicht mit umlaufenden Draht oder Schlauch nach Einbringen von Druckmittel (Vorspannung). Die Zuleitung erfolgt radial nach außen durch die freie Elastomerschicht.
- Abb. 13:: Schnitte durch eine zylindrische Elastomerbuchse mit umlaufendem Schlauch und aus dem Elastomer herausgeführten Schlauchenden. Angezeigt sind ferner Anschlussvorrichtungen und Vorrichtung zum Auffüllen mit Druckmittel.
- Abb. 14:: Querschnitt durch eine elastomere zylindrische Buchse mit eingesetztem Segment, welches Draht oder Schlauch als Trennelement aufweist und eine Zuleitung für das Druckmittel umfasst.
- Abb. 15:: Buchsensegment aus Abb. 14 in anderer Sicht.
- Abb. 16:: Buchsensegment in Längsrichtung einer zylindrischen Buchse mit umlaufenden in verschiedene Höhen der Elastomerschicht eingebrachten Drähten oder Schläuchen inklusive Zuleitung(en).
- Abb. 17:: 3D- Darstellung einer Buchse mit dem eingesetzten Segment der Abb. 16.
- Abb. 18:: Windkraftfundament mit erfindungsgemäßen Elastomerbauteilen.

In den folgenden Beispielen, die an den Abbildungen ausgerichtet sind, wird die Erfindung näher beschrieben. Die hierbei oder auch in den Abbildungen genannten Parameter und Werte sind rein exemplarisch und sollen die Erfindung nicht beschränken, insbesondere dann, wenn der Fachmann daraus ohne weiteres Verallgemeinerungen vornehmen kann, ohne dabei selbst erfinderisch sein zu müssen.

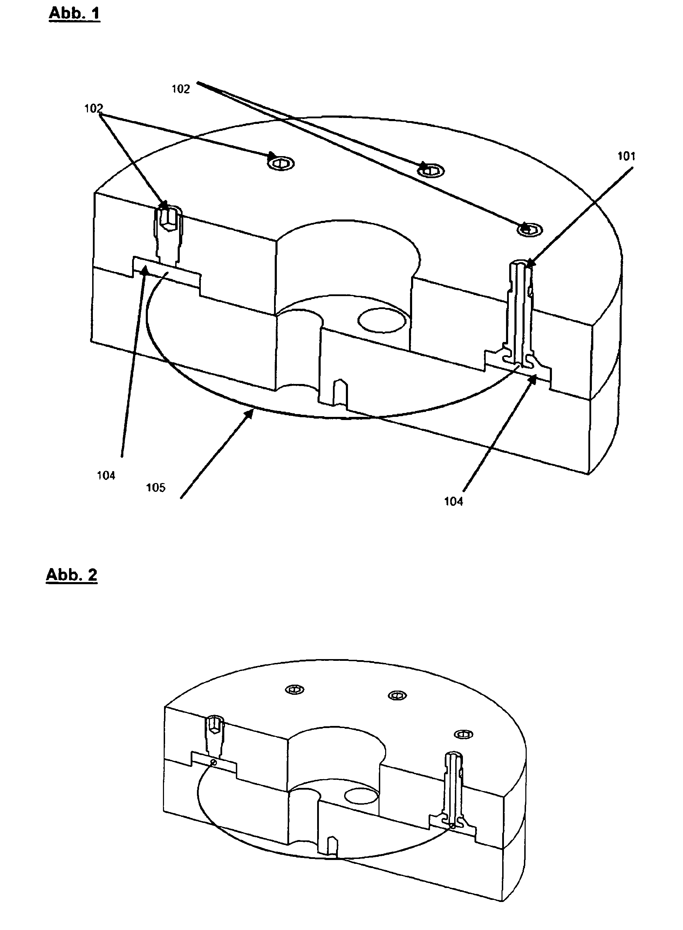

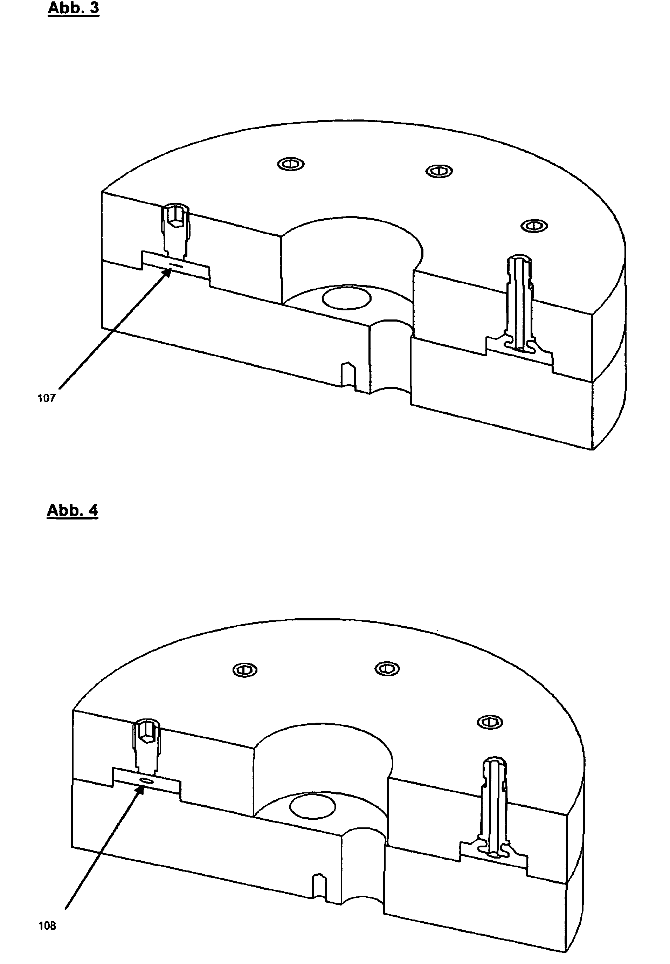

Eine einfache Ausführungsform eines elastomeren Lagers, welche die Trennelemente im erfindungsgemäßen Gebrauch umfasst, ist in Abbildung 1 dargestellt. Eine Elastomerschicht (104) ist als Ring in eine entsprechende Aussparung der Lagerplatten eingelegt. Mittig im Inneren des Elastomerringes ist ein umlaufender Drahtring einvulkanisiert worden. Die Zuleitung (101) inklusive Ventil (102) steht in direktem Kontakt mit dem Draht (105), der hier als Trennelement fungiert. Die Ventile (102) dienen dazu, mit polymerisierter Druckflüssigkeit vorgespannte Bauteile bei Bedarf zu entspannen. Ist kein Druckmittel eingespeist, so liegt die Elastomerschicht (104) an dem Draht an. Bei Einbringen von Druckmittel bildet sich um den Draht herum ein ringförmiger Hohlraum, der mit Druckmittel ausgefüllt ist (Abb. 2). Da das Elastomermaterial fest zwischen die Platten eingeklemmt ist, wird es komprimiert und erhält eine entsprechende Vorspannung. Ähnlich ist die Situation, wenn anstelle des Drahtes eine ringförmige Schicht (107) aus Farbe, Lack, Folie, Metallplatine etc. im Inneren des Elastomerkörpers vorliegt (Abb. 3 und 4).

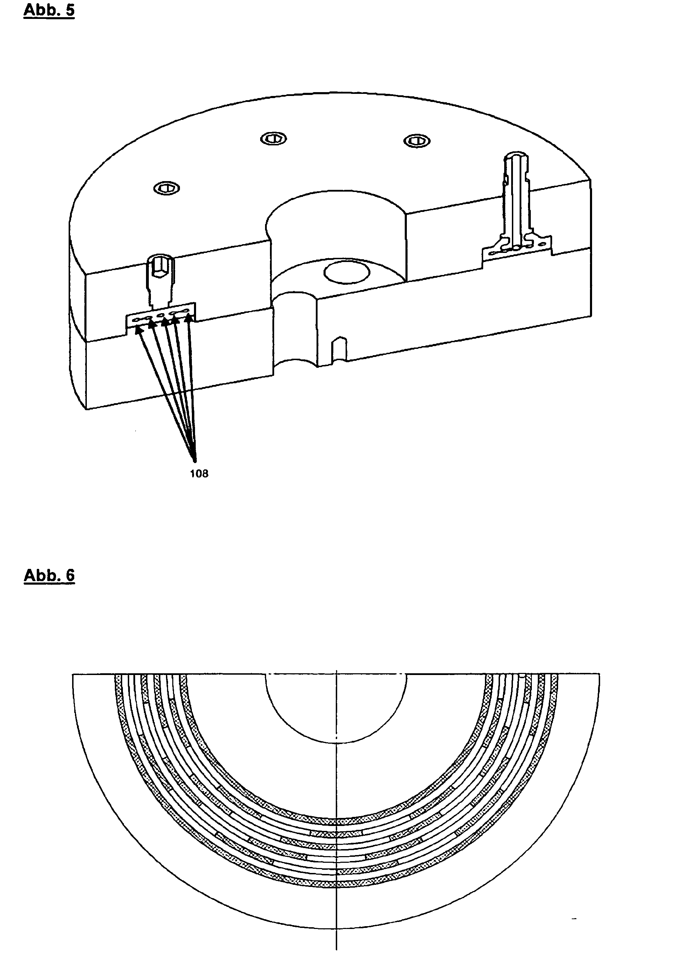

Um eine gleichmäßigere und oder größere Vorspannung zu erhalten, können auch mehrere Draht-, Schlauch- oder Schichtringe als Trennelemente in gleicher oder verschiedener Ebene /Höhe im Inneren des Elastomers angeordnet werden (Abb. 5 und Abb. 6).

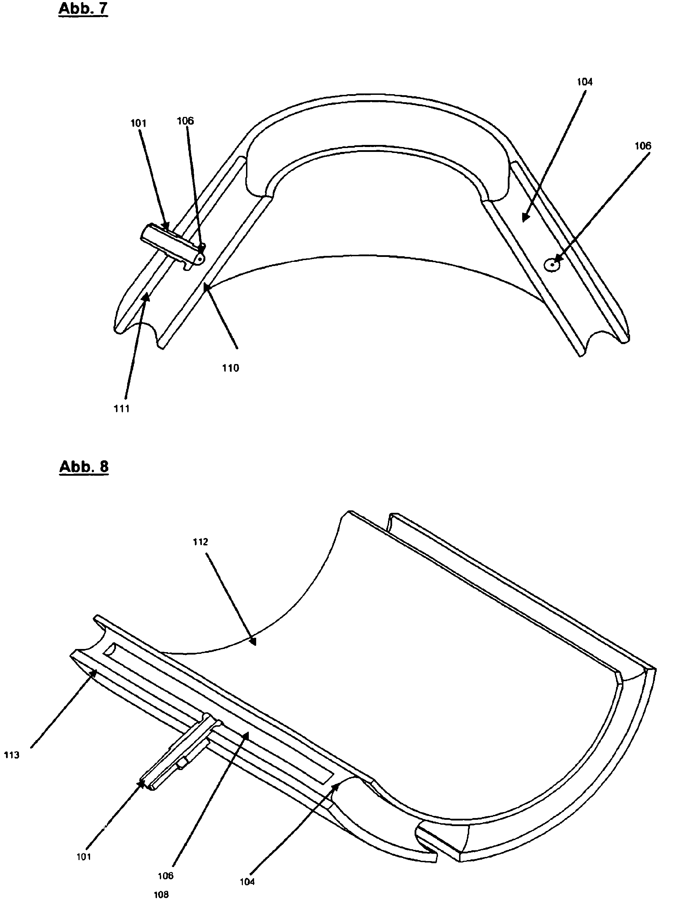

Abbildungen 7 und 8 zeigen das erfindungsgemäße Prinzip der durch Trennelemente komprimierbaren und / oder dekomprimierbaren Elastomerschichten anhand von konischen oder zylindrischen Buchsen bzw. Lagern. Man sieht dabei, dass die Trennelemente (105, 107) sowohl radial (Abb. 7) als auch axial (Abb. 8) angeordnete sein können. In den dargestellten Buchsen ist die Zuleitung (101) jeweils durch die begrenzende Außenplatte geführt. Durch Einpressen des Druckmittels (5) ergeben sich gefüllte Hohlräume (106, 108), die für die Verdrängung des umgebenden Elastomermaterials sorgen.

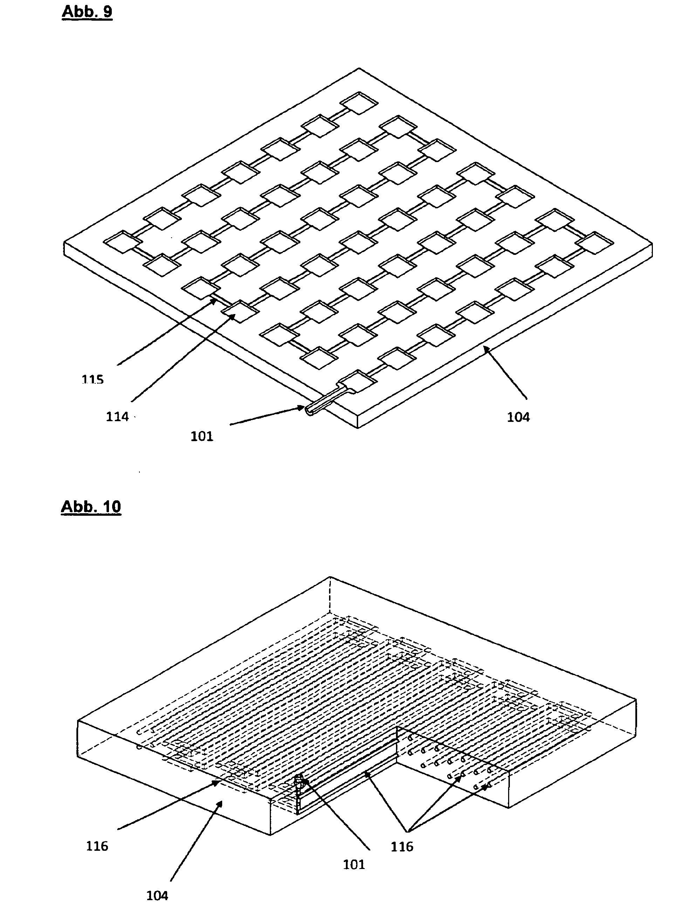

Abbildung 9 stellt eine Elastomerschicht (104) dar, auf die regelmäßige Schichtstrukturen, beispielsweise aus Farbe, Lack oder andere Materialen angeordnet sind. Die Strukturen wurden im konkreten Fall durch Farbdruck erzeugt. Hiermit kann die gesamte Fläche annähernd gleichmäßig mit Druck beaufschlagt werden. Durch die vorhanden kleinen Kanalstrukturen (115), welche die Flächenstrukturen (107) miteinander verbinden kann nach Komprimierung des umgebenden Elastomermaterials ebenfalls hydraulische Flüssigkeit oder Gas strömen. Die gesamte Struktur besitzt lediglich an einer Stelle eine Zuleitung (101), so dass das Druckmittel nur über die sich bildenden Kanäle zu den anderen Trennelementen (107) bzw. Kammern (114) gelangen können. Dadurch wird eine beliebig einstellbare Dämpfung erzeugt, welche werkstoffabhängig ist und in der Wirkung nahezu beliebig vergrößert werden kann. Ein solches Elastomerelement kann beispielsweise als Dämpfungsmatte oder als Stoßdämpfer ausgebildet werden und entsprechend fungieren.

Die besagten Strukturen können auch unregelmäßig in der Elastomermatte oder in einem entsprechend geformten Elastomerteil angeordnet werden (nicht dargestellt), wodurch ungleichmäßige Druckverteilungen ermöglicht werden. Damit entsteht eine lokal ungleichmäßige Kraft bzw. Verformung in dem Elastomerköper, so dass dieser gezielt, vom eingeleiteten Druck abhängige Bewegungen hervorbringt. Mit dieser und ähnlichen elastomeren Anordnungen können Elastomerbauteile mit einer Flüssigkeitsmenge beaufschlagt werden, welche ein Vielfaches des Volumens des eigentlichen Elastomerkörpers entspricht. Damit werden große symmetrische und unsymmetrische Bewegungen des Elastomerkörpers ermöglicht (greifende Hand).

Abbildung 10 zeigt eine andere Variante des Prinzips von Abb. 9. Hier sorgt eine dreidimensionale regelmäßige Gitterstruktur (116) ebenfalls dafür, dass eine Gesamtkompression des Elastomers erzeugt werden kann, die ein Vielfaches seines Volumens entspricht. Durch unregelmäßige Anordnungen und Formen (nicht dargestellt) können auch hiermit zielgerichtete Verformungen und damit Bewegungen ausgeführt werden.

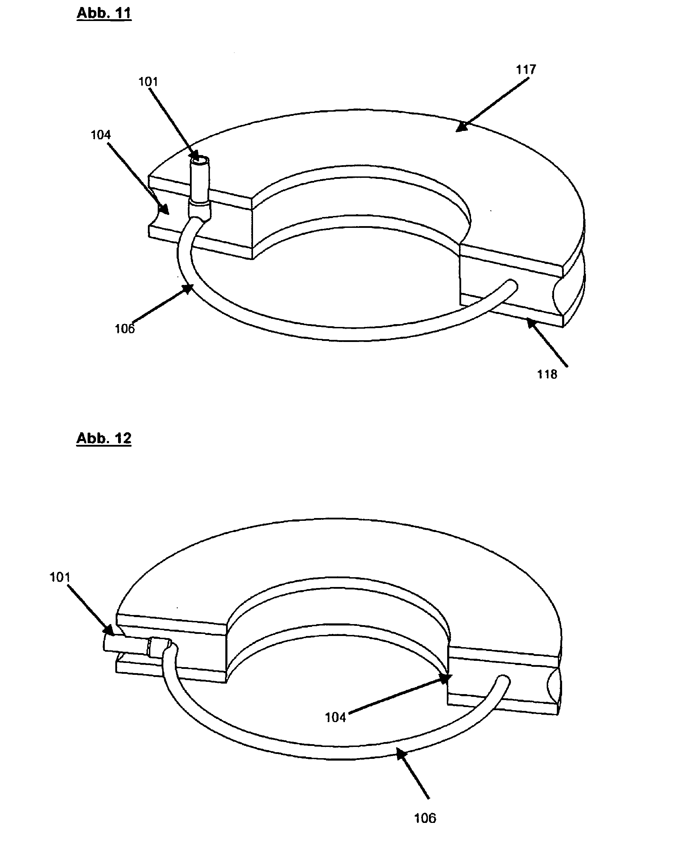

Abbildungen 11 und 12 wenden das in Abb. 1 und 2 dargestellte Konstruktionsprinzip auf ein Schichtfederelement an.

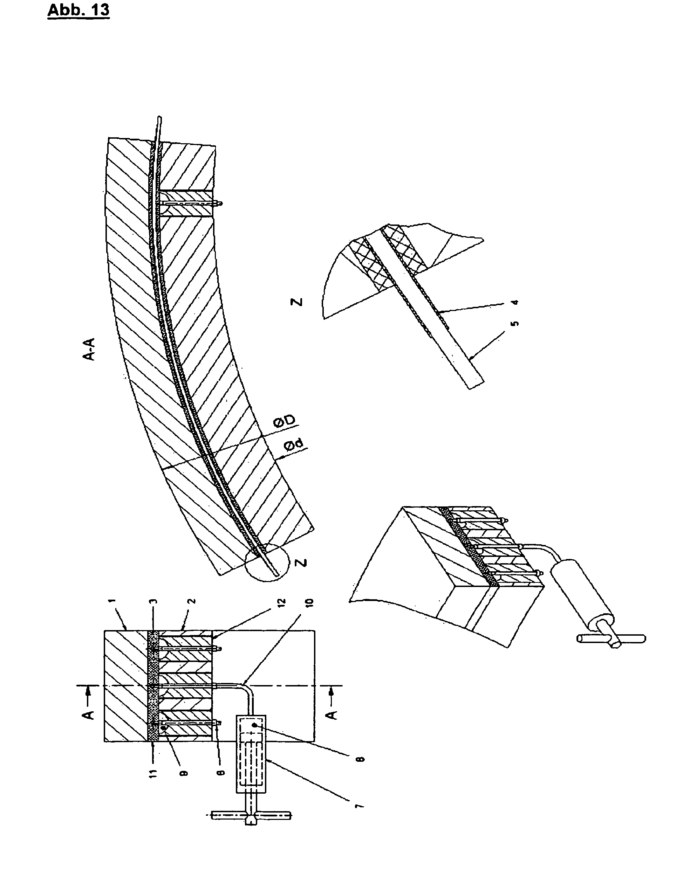

Abbildung 13 verwendet anstelle von Schichten als Trennelement einen elastischen Hohlkörper in Form eines in einer Buchse umlaufenden Schlauches (4) an. Bei Verwendung einer Halbbuchse werden die Schlauchenden aus dem Elastomer direkt herausgeführt und können direkt mit dem Druckmittelzuführungssystem verbunden werden. Alternativ können auch, wie dargestellt, die Anschlüsse durch eine oder beide Abschlussplatten (1, 2) geführt werden.

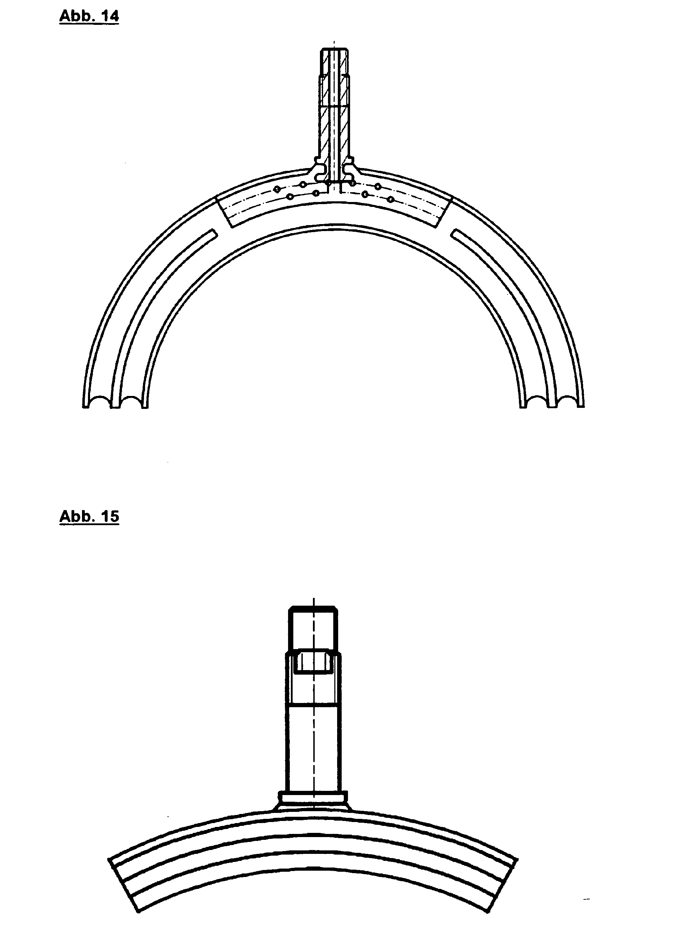

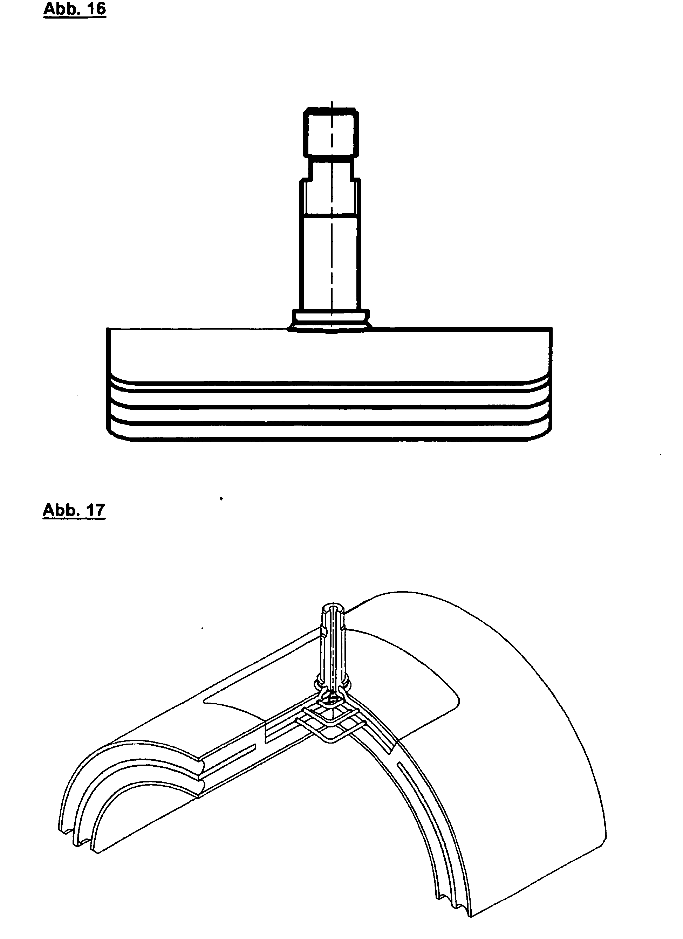

Abbildungen 14-17 zeigen den Einsatz eines elastomeren Buchsensegmentes , welches die erfindungsgemäßen Trennelemente, exemplarisch als Drahtsystem, enthält. Die Elastomerschicht des Segmentes steht in direktem Kontakt mit der Schicht der restlichen Buchse, so dass bei Druckübertragung durch die Zuleitung nicht nur das Elastomermaterial des Segmentes, sondern auch der restlichen Buchse vorgespannt wird. Der Vorteil eine solchen Buchse liegt vor allem in der einfacheren Herstellung.

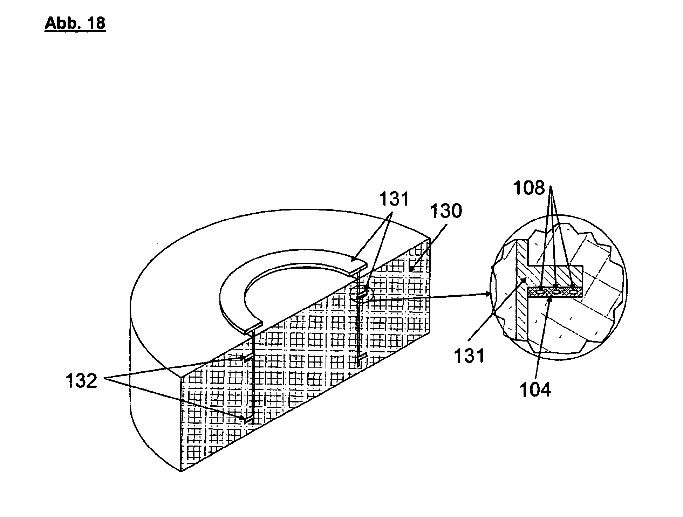

Abbildung 18 stellt eine Beton-Fundament (130), beispielsweise einer Windkraftanlage, dar. Der Turm der Anlage, welche ebenfalls ständigen Schwingungen ausgesetzt ist, wird auf dem im Fundament eingegossenen Profil-Stahlring (131) montiert. Dieser ist nur lose einbetoniert und besitzt an mindestens zwei Positionen unterschiedlicher Höhe vorzugsweise umlaufende Flansche (132), welche erfindungsgemäße Elastomerbauteile beinhalten. Durch die Bewegungen des Turmes lockert sich der Beton zwischen den umlaufenden Flanschen (132) des Einbauringes mangels Vorspannung. Durch Einpressen von Druckmitteln (5) kann im Betonfundament eine ausreichende Druckspannung generiert werden, so dass die Lockerung des Betons bzw. des Aufbaus unterbunden wird.

## Patentansprüche

1. Vorspannbares Elastomerbauteil umfassend mindestens eine Elastomerschicht und mindestens eine druckfeste Zuleitung mit Ventil, **dadurch gekennzeichnet, dass** die Elastomerschicht (3, 104) im Inneren oder an einer Grenzfläche Bereiche mit einem oder mehreren Trennelementen (4, 105, 107, 115, 116) aufweist, so dass bei Zuführung von Druckmitteln (5) über die Zuleitung mit Ventil (101) im Bereich der Trennelemente (105, 107, 115, 116) oder in den Trennelementen (4) selbst durch Auseinanderdrücken der umgebenden Elastomerschicht Hohlräume oder Kammern (106, 108, 114) entstehen, die mit dem Druckmittel (5) ausgefüllt und aufgeweitet werden können, wodurch die umgebende Elastomerschicht (3, 104) zusammengedrückt wird, und das Elastomerteil so eine Vorspannung erhält.

2. Elastomerbauteil nach Anspruch 1, **dadurch gekennzeichnet, dass** das Trennelement (105, 107, 115, 116) an der umgebenden Elastomerschicht anliegt oder von ihr umgeben ist, ohne mit dieser fest verbunden zu sein, und besagte Hohlräume oder Kammern (106, 108, 114) um die Trennelemente herum durch Einleitung der Druckmittel (5) entstehen.

3. Elastomerbauteil nach Anspruch 1 oder 2, **dadurch gekennzeichnet, dass** die Elastomerschicht (3, 104) mindestens eine Abschlussplatte (1, 2, 117, 118, 110 - 113) aus unelastischem Material aufweist, mit der die Elastomerschicht verbunden ist.

4. Elastomerbauteil nach Anspruch 3, **dadurch gekennzeichnet, dass** die Elastomerschicht (3, 104) eine obere und eine untere Abschlussplatte (1, 2, 117, 118, 110 - 113) aus unelastischem Material aufweist, mit denen die Elastomerschicht (3, 104) fest verbunden ist, oder zwischen denen die Elastomerschicht eingeklemmt ist.

5. Elastomerbauteil nach Anspruch 4, **dadurch gekennzeichnet, dass** die Zuleitung (10, 101) von außen durch eine Anschlussplatte oder direkt seitlich durch die Elastomerschicht (3, 104) erfolgt.

6. Elastomerbauteil nach Anspruch 5 in Form einer Buchse, Halbbuchse oder eines Segments einer Buchse, **dadurch gekennzeichnet, dass** die Abschlussplatten zylindrische (112, 113) oder konische Schalen (110, 111), Halbschalen oder entsprechend geformte Segmente dieser Schalen oder Halbschalen sind. -

7. Elastomerbuchse nach Anspruch 6, **dadurch gekennzeichnet, dass** das Trennelement (4, 105, 107, 115, 116) inklusive Zuleitung (10, 101) in einem in die Buchse einsetzbaren Buchesensegment untergebracht ist, wobei mindestens teilweise Elastomerbereiche (3, 104) der Buchse und des Buchsensegmentes zur Druckübertragung in direkter Berührung miteinander stehen.

8. Elastomerbauteil nach einem der Ansprüche 1-7, **dadurch gekennzeichnet, dass** es mindestens eine unelastische Zwischenschicht aufweist, welche sich im Inneren des Elastomers befindet und mit dem Elastomermaterial verbunden ist.

9. Elastomerbauteil nach Anspruch 5 in Form einer Schichtfeder, **dadurch gekennzeichnet, dass** die Abschlussplatten als Scheiben (117, 118) ausgebildet sind, die mit Maschinen- oder Generatorteilen verbunden werden können, und die Elastomerschicht (3, 104) besagte Scheiben gegeneinander elastisch lagert.

10. Elastomerbauteil nach einem der Ansprüche 1 - 9, **dadurch gekennzeichnet, dass** das Trennelement ein verformbarer Hohlkörper (4) mit elastischer Außenwand ist, welcher über die Zuleitung (10, 101) mit Druckmittel (5) aufgefüllt und ausgedehnt werden kann.

11. Elastomerbauteil nach Anspruch 10, **dadurch gekennzeichnet, dass** der verformbare Hohlkörper ein elastischer Schlauch ist, in welchen das Druckmittel (5) eingefüllt wird.

12. Elastomerbauteil nach einem der Ansprüche 1 - 9, **dadurch gekennzeichnet, dass** das Trennelement ein eingelegter Draht, Faden oder Hohldraht (105, 116) ist, welcher aus einem Material besteht oder mit einem Material umgeben ist, das keine feste Verbindung mit dem umgebenden Elastomermaterial (3, 104) bei dessen Herstellung einzugehen vermag.

13. Elastomerbauteil nach einem der Ansprüche 1 - 9, **dadurch gekennzeichnet, dass** das Trennelement eine eingebrachte Schicht (107, 116) ist, welche aus Farbe, Lack, Kunststoff, Papier oder Metall ist, welche aus einem Material besteht oder mit einem Material umgeben ist, das keine feste Verbindung mit dem umgebenden Elastomermaterial (3, 104) bei dessen Herstellung einzugehen vermag.

14. Elastomerbauteil nach Anspruch 13, **dadurch gekennzeichnet, dass** die Schicht (107) durch Aufdrucken oder Aufkleben erzeugt wird.

15. Elastomerbauteil nach einem der Ansprüche 1-14, **dadurch gekennzeichnet, dass** das Trennelement (4, 105, 107, 115, 116) eine ein- zwei- oder dreidimensionale offene oder geschlossene Struktur innerhalb des Elastomers (3, 104) aufweist.

16. Elastomerbauteil nach Anspruch 15, **dadurch gekennzeichnet, dass** das Trennelement eine ringförmige, spiralförmige, meanderförmige, unterbrochene oder durchgehende Struktur besitzt.

17. Elastomerbauteil nach einem der Ansprüche 1-16, **dadurch gekennzeichnet, dass** das Druckmittel (5) ein Gas, Luft oder eine hydraulische, viskose oder polymerisierbare Flüssigkeit ist.

18. Elastomerbauteil nach einem der Ansprüche 1-17, **dadurch gekennzeichnet, dass** es eine variabel einstellbare Vorspannung besitzt, welche durch Einspeisung oder Entzug des Druckmittels (5) über die Zuleitung und einem verschließbaren Ventil erreicht wird.

19. Elastomerbauteil nach einem der Ansprüche 1-18, **dadurch gekennzeichnet, dass** die Elastomerschicht (3, 104) mehrere gleichartige Trennelemente oder mehrere Einheiten von gleichartigen Trennelementen (4, 105, 107, 115, 116) aufweist, welche gleichmäßig in dem Elastomerbauteil oder einer Untereinheit des Elastomerbauteils verteilt sind, so dass eine gleichmäßige symmetrische Druckverteilung und damit Vorspannung im Elastomerbauteil oder einer Untereinheit auftritt.

20. Elastomerbauteil nach einem der Ansprüche 1 - 18, **dadurch gekennzeichnet, dass** die Elastomerschicht (3) mehrere gleichartige Trennelemente oder mehrere Einheiten von gleichartigen Trennelementen (4, 105, 107, 115, 116) aufweist, welche unterschiedlich in dem Elastomerbauteil oder einer Untereinheit des Elastomerbauteils verteilt sind, wobei diese Trennelemente oder Einheiten von Trennelementen mindestens eine Zuleitung (10, 101) aufweisen, so dass lokal unterschiedlich starke unsymmetrische Druckverteilungen und damit Vorspannungen im Bauteil oder seiner Untereinheiten eingestellt werden können.

21. Elastomerbauteil nach einem der Ansprüche 1-18, **dadurch gekennzeichnet, dass** die Elastomerschicht (3) mehrere verschiedenartige Trennelemente oder mehrere Einheiten von verschiedenartiger Trennelementen (4, 105, 107, 115, 116) aufweist, welche gleichmäßig in dem Elastomerbauteil oder einer Untereinheit des Elastomerbauteils verteilt sind, wobei diese Trennelemente oder Einheiten von Trennelementen mindestens ein Zuleitung (10, 101) aufweisen, so dass lokal unterschiedlich starke Druckverteilungen und damit Vorspannungen im Bauteil eingestellt werden können.

22. Elastomerbauteil nach einem der Ansprüche 1-21, **dadurch gekennzeichnet, dass** die Elastomerschichten (3, 104) im Bereich der lokal unterschiedlich angeordneten Trennelemente oder Einheiten von Trennelementen, unterschiedliche Steifigkeit und /oder Ausdehnungskoeffizienten aufweisen.

23. Elastomere Anordnung zur Ausführung von künstlichen Bewegungen, umfassend ein oder mehrere Elemente von Elastomerbauteilen gemäß einem der Ansprüche 19 - 22, welche funktionell in Verbindung miteinander stehen, sowie eine intelligente computerunterstützte Elektronik, welche gezielt die einzelnen Strukturen in den Trennelementen der Elemente ansteuert und für eine dynamische Druckverteilung und somit variable Ausdehnung in den lokal unterschiedlichen Bereichen der betreffenden Elastomerschicht(en) sorgt, so dass durch die relativ zueinander unterschiedliche Kompression oder Dekompression des Elastomermaterials im Bereich der jeweils angesteuerten Trennelemente und ihrer Strukturen innerhalb der einzelnen Elastomerelemente dynamische Verformungen in der elastomeren Anordnung auftreten, und damit zielgerichtete Bewegung einzelner Elemente der Anordnung mit Hilfe der Steuerung ausgeführt werden.

24. Elastomere Anordnung nach Anspruch 23, **dadurch gekennzeichnet, dass** die einzelnen Elastomerelemente (3, 104) eine Form und Gestalt haben, welche förderlich für die gewünschte zielgerichtete Bewegung ist.

25. Elastomere Anordnung nach Anspruch 24, in Form eines Greifers oder einer künstlichen Hand.

26. Verfahren zur Herstellung eines vorgespannten Elastomerbauteils nach einem der Ansprüche 1 - 22, umfassend die folgenden Schritte:
(i) Bereitstellung einer festen Elastomerschicht (3, 104) als Teilschicht des gesamten Elastomerbauteils in gewünschter Form und Größe,
(ii) Anbringung eines oder mehrerer Trennelemente (4, 105, 107, 115, 116) auf einer Oberfläche der bereitgestellten Elastomerschicht nach Schritt (i) inklusive mindestens einer druckstabilen Zuleitung (10, 101) in oder auf das Trennelement, ggf. unter Zuhilfenahme von Hilfsmitteln, welche die Anbringung und Positionierung auf der Elastomerschicht erleichtern,
(iii) Aufbringung einer zweiten Elastomerschicht (3, 104) in Form einer noch nicht ausgehärteten oder polymerisierten Elastomermasse auf die besagte Trennelemente aufweisende Oberfläche der ersten festen Elastomerschicht, so dass nach Aushärtung oder Polymerisation der Elastomermasse, diese mit der ersten Elastomerschicht eine feste Verbindung eingeht und so die fertige Elastomerschicht (3, 104) bildet, wobei die eingebrachten Trennelemente auf Grund ihrer Materialeigenschaft keine Verbindung mit der Elastomermasse bei deren Aushärtung eingehen,
(iv) Wiederholung der Schritte (ii) und (iii) für den Fall, dass mehrere Ebenen von Trennelementen in Form von mehreren Teilschichten in der Elastomerschicht (3, 104) gewünscht sind, und
(v) Einspeisung des Druckmittels über die Zuleitung (10, 101) unter Druck in den Bereich zwischen Trennelement und umgebender Elastomerschicht oder in das Trennelement selbst, wobei sich diese komprimiert und das Elastomerbauteil dadurch eine Vorspannung erhält.

27. Verwendung eines Elastomerbauteils gemäß der Ansprüche 1 - 22 als Elastomerbuchse oder elastomerer Schichtfeder mit variabel einstellbarer Vorspannung.

28. Verwendung eines Elastomerbauteils gemäß der Ansprüche 1 - 22 in Windkraftanlagen.

29. Verwendung einer Elastomeranordnung gemäß Anspruch 23, 24 oder 25 zur Erzeugung von künstlichen Bewegungen und dadurch hervorgerufenen Aktionen.

## Claims

1. Prestressable elastomer component comprising at least one elastomer layer and at least one pressure-tight supply line with valve, **characterised in that** the elastomer layer (3, 104) has, in the interior or at an interface, areas having one or more separating elements (4, 105, 107, 115, 116), so that, on supply of pressure media (5) via the supply line with valve (101), cavities or chambers (106, 108, 114) are formed in the region of the separating elements (105, 107, 115, 116) or in the separating elements (4) themselves due to forcing-apart of the surrounding elastomer layer and can be filled with the pressure medium (5) and expanded, causing the surrounding elastomer layer (3, 104) to be compressed, and the elastomer part thus attains a prestress.

2. Elastomer component according to Claim 1, **characterised in that** the separating element (105, 107, 115, 116) is in contact with the surrounding elastomer layer or is surrounded thereby without being firmly connected thereto, and said cavities or chambers (106, 108, 114) around the separating elements are formed by the introduction of the pressure media (5).

3. Elastomer component according to Claim 1 or 2, **characterised in that** the elastomer layer (3, 104) has at least one termination plate (1, 2, 117, 118, 110 - 113) comprising non-elastic material, to which the elastomer layer is connected.

4. Elastomer component according to Claim 3, **characterised in that** the elastomer layer (3, 104) has an upper termination plate and a lower termination plate (1, 2, 117, 118, 110 - 113) comprising non-elastic material, to which the elastomer layer (3, 104) is firmly connected or between which the elastomer layer is clamped.

5. Elastomer component according to Claim 4, **characterised in that** the supply (10, 101) takes place from the outside through a connection plate or directly at the side through the elastomer layer (3, 104).

6. Elastomer component according to Claim 5 in the form of a bush, half-bush or segment of a bush, **characterised in that** the termination plates are cylindrical (112, 113) or conical shells (110, 111), half-shells or correspondingly shaped segments of these shells or half-shells.

7. Elastomer bush according to Claim 6, **characterised in that** the separating element (4, 105, 107, 115, 116) including supply line (10, 101) is accommodated in a bush segment which can be inserted into the bush, where at least some of the elastomer regions (3, 104) of the bush and bush segment are in direct contact with one another for pressure transmission.

8. Elastomer component according to one of Claims 1-7, **characterised in that** it has at least one non-elastic interlayer which is located in the interior of the elastomer and is connected to the elastomer material.

9. Elastomer component according to Claim 5 in the form of a layer spring, **characterised in that** the termination plates are in the form of discs (117, 118), which can be connected to machine or generator parts, and the elastomer layer (3, 104) elastically supports said discs against one another.

10. Elastomer component according to one of Claims 1-9, **characterised in that** the separating element is a deformable hollow body (4) having an elastic outer wall which can be filled with pressure medium (5) via the supply line (10, 101) and expanded.

11. Elastomer component according to Claim at 10, **characterised in that** the deformable hollow body is an elastic tube into which the pressure medium (5) is introduced.

12. Elastomer component according to one of Claims 1-9, **characterised in that** the separating element is an inserted wire, thread or hollow wire (105, 116) which consists of a material or is surrounded by a material which is not capable of forming a firm connection to the surrounding elastomer material (3, 104) during production thereof.

13. Elastomer component according to one of Claims 1 - 9, **characterised in that** the separating element is an introduced layer (107, 116) of paint, coating, plastic, paper or metal which consists of a material or is surrounded by a material which is not capable of forming a firm connection to the surrounding elastomer material (3, 104) during production thereof.

14. Elastomer component according to Claim 13, **characterised in that** the layer (107) is produced by printing or adhesive bonding.

15. Elastomer component according to one of Claims 1-14, **characterised in that** the separating element (4, 105, 107, 115, 116) has a one-, two- or three-dimensional open or closed structure within the elastomer (3, 104).

16. Elastomer component according to Claim 15, **characterised in that** the separating element has a ring-shaped, spiral-shaped, meander-shaped, interrupted or continuous structure.

17. Elastomer component according to one of Claims 1-16, **characterised in that** the pressure medium (5) is a gas, air or a hydraulic, viscous or polymerisable liquid.

18. Elastomer component according to one of Claims 1-17, **characterised in that** it has a variably adjustable prestress which is achieved by feeding the pressure medium (5) in or removing it via the supply line and a sealable valve.

19. Elastomer component according to one of Claims 1-18, **characterised in that** the elastomer layer (3, 104) has a plurality of identical separating elements or a plurality of units of identical separating elements (4, 105, 107, 115, 116) which are distributed uniformly in the elastomer component or a sub-unit of the elastomer component so that a uniform symmetrical pressure distribution and thus prestress arises in the elastomer component or a sub-unit.

20. Elastomer component according to one of Claims 1-18, **characterised in that** the elastomer layer (3) has a plurality of identical separating elements or a plurality of units of identical separating elements (4, 105, 107, 115, 116) which are distributed differently in the elastomer component or a sub-unit of the elastomer component, where these separating elements or units of separating elements have at least one supply line (10, 101), so that asymmetrical pressure distributions and thus prestresses with locally different strengths can be established in the component or its sub-units.

21. Elastomer component according to one of Claims 1-18, **characterised in that** the elastomer layer (3) has a plurality of different separating elements or a plurality of units of different separating elements (4, 105, 107, 115, 116) which are distributed uniformly in the elastomer component or a sub-unit of the elastomer component, where these separating elements or units of separating elements have at least one supply line (10, 101), so that pressure distributions and thus prestresses with locally different strengths can be established in the component.

22. Elastomer component according to one of Claims 1-21, **characterised in that** the elastomer layers (3, 104) have different stiffness and/or expansion coefficients in the region of the locally differently arranged separating elements or units of separating elements.

23. Elastomeric arrangement for the execution of artificial movements, comprising one or more elements of elastomer components according to one of Claims 19-22, which are functionally connected to one another, and an intelligent computer-supported electronic system which specifically selects the individual structures in the separating elements of the elements and ensures a dynamic pressure distribution and thus variable expansion in the locally different regions of the relevant elastomer layer(s), so that the different compression or decompression of the elastomer material relative to one another in the region of the respectively selected separating elements and structures thereof within the individual elastomer elements causes dynamic deformations in the elastomeric arrangement, and thus specific movement of individual elements of the arrangement with the aid of the control.

24. Elastomeric arrangement according to Claim 23, **characterised in that** the individual elastomer elements (3, 104) have a shape and design which promotes the desired specific movement.

25. Elastomeric arrangement according to Claim 24, in the form of a claw or artificial hand.

26. Process for the production of a prestressed elastomer component according to one of Claims 1-22, comprising the following steps:
(i) provision of a solid elastomer layer (3, 104) as part-layer of the entire elastomer component in the desired shape and size,
(ii) mounting of one or more separating elements (4, 105, 107, 115, 116) on a surface of the provided elastomer layer after step (i), including at least one pressure-stable supply line (10, 101) in or on the separating element, optionally with the aid of assistants which simplify the mounting and positioning on the elastomer layer,
(iii) application of a second elastomer layer (3, 104) in the form of an as yet uncured or polymerised elastomer composition to the surface of the first solid elastomer layer having the said separating elements, so that, after curing or polymerisation of the elastomer composition, the latter forms a strong bond to the first elastomer layer and thus forms the finished elastomer layer (3, 104), where the introduced separating elements do not form a bond to the elastomer composition during curing thereof owing to their material property,
(iv) repetition of steps (ii) and (iii) in the case where a plurality of planes of separating elements in the form of a plurality of part-layers in the elastomer layer (3, 104) are desired, and
(v) feeding of the pressure medium via the supply line (10, 101) under pressure into the region between separating element and surrounding elastomer layer or into the separating element itself, where the latter is compressed, and the elastomer component thus attains a prestress.

27. Use of an elastomer component according to Claims 1 - 22 as elastomer bush or elastomeric layer spring having variably adjustable prestress.

28. Use of an elastomer component according to Claims 1 - 22 in wind turbines.

29. Use of an elastomer arrangement according to Claim 23, 24 or 25 for the generation of artificial movements and actions caused thereby.

## Revendications

1. Composant en élastomère précontraignable comprenant au moins une couche en élastomère et au moins une ligne d'alimentation étanche à pression munie d'une vanne, **caractérisé en ce que** la couche en élastomère (3, 104) comporte, à l'intérieur ou au niveau d'une interface, des zones comportant un ou plusieurs éléments de séparation (4, 105, 107, 115, 116), de telle sorte que, lors de l'alimentation en milieux de pression (5) via la ligne d'alimentation munie d'une vanne (101), des cavités ou chambres (106, 108, 114) soient formées dans la région des éléments de séparation (105, 107, 115, 116) ou dans les éléments de séparation (4) eux-mêmes du fait d'une force de séparation de la couche en élastomère d'entourage et puissent être remplies par le milieu de pression (5) et dilatées, ce qui a pour effet que la couche en élastomère d'entourage (3, 104) est comprimée, et la partie en élastomère est ainsi mise en précontrainte.

2. Composant en élastomère selon la revendication 1, **caractérisé en ce que** l'élément de séparation (105, 107, 115, 116) est en contact avec la couche en élastomère d'entourage ou est entouré par celle-ci sans lui être fermement connecté, et lesdites cavités ou chambres (106, 108, 114) autour des éléments de séparation sont formées par l'introduction des milieux de pression (5).

3. Composant en élastomère selon la revendication 1 ou 2, **caractérisé en ce que** la couche en élastomère (3, 104) comporte au moins une plaque de terminaison (1, 2, 117, 118, 110 - 113) comprenant un matériau non élastique, plaque à laquelle la couche en élastomère est fermement connectée.

4. Composant en élastomère selon la revendication 3, **caractérisé en ce que** la couche en élastomère (3, 104) comporte une plaque de terminaison supérieure et une plaque de terminaison inférieure (1, 2, 117, 118, 110 - 113) comprenant un matériau non élastique, plaques auxquelles la couche en élastomère (3, 104) est fermement connectée aux plaques entre lesquelles la couche en élastomère est serrée.

5. Composant en élastomère selon la revendication 4, **caractérisé en ce que** l'alimentation (10, 101) est réalisée depuis l'extérieur par l'intermédiaire d'une plaque de connexion ou directement sur le côté par l'intermédiaire de la couche en élastomère (3, 104).

6. Composant en élastomère selon la revendication 5 sous la forme d'une douille, d'une demi-douille ou d'un segment de douille, **caractérisé en ce que** les plaques de terminaison sont des coques cylindriques (112, 113) ou coniques (110, 111), des demi-coques ou des segments conformés en correspondance de ces coques ou demi-coques.

7. Douille en élastomère selon la revendication 6, **caractérisée en ce que** l'élément de séparation (4, 105, 107, 115, 116) incluant une ligne d'alimentation (10, 101) est logé dans un segment de douille qui peut être inséré à l'intérieur de la douille, où au moins certaines des régions en élastomère (3, 104) de la douille et du segment de douille sont en contact mutuel direct pour une transmission de pression.

8. Composant en élastomère selon l'une des revendications 1 - 7, **caractérisé en ce qu'**il comporte au moins une intercouche non élastique qui est localisée dans l'intérieur de l'élastomère et qui est connectée au matériau d'élastomère.

9. Composant en élastomère selon la revendication 5 sous la forme d'un ressort en couches, **caractérisé en ce que** les plaques de terminaison sont sous la forme de disques (117, 118), lesquels peuvent être connectés à des parties de machine ou de génératrice, et la couche en élastomère (3, 104) supporte élastiquement lesdits disques les uns contre les autres.

10. Composant en élastomère selon l'une des revendications 1-9, **caractérisé en ce que** l'élément de séparation est un corps creux déformable (4) comportant une paroi externe élastique qui peut être remplie d'un milieu de pression (5) via la ligne d'alimentation (10, 101) et dilatée.

11. Composant en élastomère selon la revendication 10, **caractérisé en ce que** le corps creux déformable est un tube élastique à l'intérieur duquel le milieu de pression (5) est introduit.

12. Composant en élastomère selon l'une des revendications 1-9, **caractérisé en ce que** l'élément de séparation est un fil, filet inséré ou fil creux (105, 116) qui est constitué par un matériau ou qui est entouré par un matériau qui ne peut pas former une connexion ferme avec le matériau d'élastomère d'entourage (3, 104) pendant sa fabrication.

13. Composant en élastomère selon l'une des revendications 1-9, **caractérisé en ce que** l'élément de séparation est une couche introduite (107, 116) de peinture, de revêtement, de matière plastique, de papier ou de métal qui est constituée par un matériau ou qui est entourée par un matériau qui ne peut pas former une connexion ferme avec le matériau d'élastomère d'entourage (3, 104) pendant sa fabrication.

14. Composant en élastomère selon la revendication 13, **caractérisé en ce que** la couche (107) est fabriquée au moyen d'une impression ou d'une liaison par adhésif.

15. Composant en élastomère selon l'une des revendications 1-14, **caractérisé en ce que** l'élément de séparation (4, 105, 107, 115, 116) comporte une structure ouverte ou fermée mono-, bi- ou tridimensionnelle à l'intérieur de l'élastomère (3, 104).

16. Composant en élastomère selon la revendication 15, **caractérisé en ce que** l'élément de séparation comporte une structure en forme de bague, en forme de spirale, en forme de méandre, interrompue ou continue.

17. Composant en élastomère selon l'une des revendications 1-16, **caractérisé en ce que** le milieu de pression (5) est un gaz, de l'air ou un liquide hydraulique, visqueux ou polymérisable.

18. Composant en élastomère selon l'une des revendications 1-17, **caractérisé en ce qu'**il présente une précontrainte réglable de façon variable qui est réalisée en alimentant le milieu de pression (5) dans la ligne d'alimentation ou en l'enlevant via la ligne d'alimentation et une vanne pouvant être rendue étanche.

19. Composant en élastomère selon l'une des revendications 1-18, **caractérisé en ce que** la couche en élastomère (3, 104) comporte une pluralité d'éléments de séparation identiques ou une pluralité d'unités d'éléments de séparation identiques (4, 105, 107, 115, 116) qui sont distribués uniformément dans le composant en élastomère ou une sous-unité du composant en élastomère de telle sorte qu'une distribution de pression symétrique uniforme et par conséquent une précontrainte prennent naissance dans le composant en élastomère ou une sous-unité.

20. Composant en élastomère selon l'une des revendications 1-18, **caractérisé en ce que** la couche en élastomère (3, 104) comporte une pluralité d'éléments de séparation identiques ou une pluralité d'unités d'éléments de séparation identiques (4, 105, 107, 115, 116) qui sont distribués différemment dans le composant en élastomère ou une sous-unité du composant en élastomère de telle sorte que des distributions de pression asymétriques et par conséquent des précontraintes présentant des résistances localement différentes puissent être établies dans le composant ou ses sous-unités.

21. Composant en élastomère selon l'une des revendications 1-18, **caractérisé en ce que** la couche en élastomère (3) comporte une pluralité d'éléments de séparation identiques ou une pluralité d'unités d'éléments de séparation identiques (4, 105, 107, 115, 116) qui sont distribués uniformément dans le composant en élastomère ou une sous-unité du composant en élastomère, où ces éléments de séparation ou unités d'éléments de séparation comportent au moins une ligne d'alimentation (10, 101), de telle sorte que des distributions de pression et par conséquent des précontraintes présentant des résistances localement différentes puissent être établies dans le composant.

22. Composant en élastomère selon l'une des revendications 1-21, **caractérisé en ce que** les couches en élastomère (3, 104) présentent des coefficients de raideur et/ou de dilatation différents dans la région des éléments de séparation ou des unités d'éléments de séparation agencés localement différemment.

23. Agencement élastomérique pour l'exécution de mouvements artificiels, comprenant un ou plusieurs éléments de composant en élastomère selon l'une des revendications 19-22, lesquels sont fonctionnellement connectés les uns aux autres, et un système électronique supporté par ordinateur intelligent qui sélectionne spécifiquement les structures individuelles dans les éléments de séparation des éléments et qui assure une distribution de pression dynamique et par conséquent une dilatation variable dans les régions localement différentes de la ou des couche(s) en élastomère pertinente(s), de telle sorte qu'une compression ou décompression différente du matériau d'élastomère de façon relative dans la région des éléments de séparation et de leurs structures respectivement sélectionnés à l'intérieur des éléments en élastomère individuels génère des déformations dynamiques dans l'agencement élastomérique, et par conséquent un mouvement spécifique d'éléments individuels de l'agencement à l'aide du contrôle.

24. Agencement élastomérique selon la revendication 23, **caractérisé en ce que** les éléments en élastomère individuels (3, 104) présentent une forme et une conception qui favorisent le mouvement spécifique souhaité.

25. Agencement élastomérique selon la revendication 24, sous la forme d'une pince ou main artificielle.

26. Procédé pour la fabrication d'un composant en élastomère précontraint selon l'une des revendications 1 - 22, comprenant les étapes qui suivent :
(i) fourniture d'une couche en élastomère solide (3, 104) en tant que couche constitutive du composant en élastomère complet selon la forme et la dimension souhaitées,
(ii) montage d'un ou de plusieurs éléments de séparation (4, 105, 107, 115, 116) sur une surface de la couche en élastomère fournie après l'étape (i), incluant au moins une ligne d'alimentation stable en pression (10, 101) dans ou sur l'élément de séparation, en option moyennant l'aide d'assistants qui simplifient le montage et le positionnement sur la couche en élastomère,
(iii) application d'une seconde couche en élastomère (3, 104) sous la forme of d'une composition d'élastomère non encore durcie ou polymérisée sur la surface de la première couche en élastomère solide comportant lesdits éléments de séparation, de telle sorte que, après durcissement ou polymérisation de la composition en élastomère, cette dernière forme une liaison forte sur la première couche en élastomère et forme par conséquent la couche en élastomère finie (3, 104), où les éléments de séparation introduits ne forment pas une liaison sur la composition en élastomère pendant son durcissement du fait de leur propriété de matériau,
(iv) répétition des étapes (ii) et (iii) dans le cas où une pluralité de plans d'éléments de séparation sous la forme d'une pluralité de couches constitutives dans la couche en élastomère (3, 104) sont souhaités, et
(v) application du milieu de pression via la ligne d'alimentation (10, 101) sous pression dans la région entre un élément de séparation et une couche en élastomère d'entourage ou dans l'élément de séparation lui-même, où ce dernier est comprimé, et le composant en élastomère est ainsi mis en précontrainte.

27. Utilisation d'un composant en élastomère selon les revendications 1 - 22 en tant que douille en élastomère ou ressort en couches élastomériques présentant une précontrainte réglable de façon variable.

28. Utilisation d'un composant en élastomère selon les revendications 1-22 dans des turbines éoliennes.

29. Utilisation d'un agencement en élastomère selon la revendication 23, 24 ou 25 pour la génération de mouvements artificiels et d'actions ainsi générées.
